Europäisches Patentamt

(18) European Patent Office

Office européen des brevets

(11) Publication number: **0 069 366**
**B1**

(12) # EUROPEAN PATENT SPECIFICATION

(45) Date of publication of patent specification: **01.03.89**

(51) Int. Cl.⁴: **G 01 C 19/64, H 01 S 3/083**

(21) Application number: **82105926.8**

(22) Date of filing: **02.07.82**

(54) Method and apparatus for angular rate sensing.

(30) Priority: **06.07.81 US 280770**
**06.07.81 US 280423**

(43) Date of publication of application:
**12.01.83 Bulletin 83/02**

(45) Publication of the grant of the patent:
**01.03.89 Bulletin 89/09**

(84) Designated Contracting States:
**DE FR GB SE**

(56) References cited:
**FR-A-2 360 885**
**US-A-4 248 534**

(73) Proprietor: **HONEYWELL INC.**
**Honeywell Plaza**
**Minneapolis Minnesota 55408 (US)**

(72) Inventor: **Morgan, Avery A.**
**2097 Tanglewood Drive N.E.**
**St. Petersburg Florida 33702 (US)**
Inventor: **Quasius, Glenn R.**
**1630 Whitewood Drive**
**Clearwater Florida 33516 (US)**

(74) Representative: **Rentzsch, Heinz et al**
**Honeywell Europe S.A. Holding KG Patent- und**
**Lizenzabteilung Kaiserleistrasse 55**
**D-6050 Offenbach am Main (DE)**

## Description

Field of the invention

The present invention relates to an angular rate sensor according to the preamble of claim 1 and to a method for sensing angular rates in particular with ring laser gyros according to the preamble of claim 23.

Background of the invention

In a simple laser angular rate sensor, sometimes referred to as a ring laser gyro, two counter-traveling waves are provided by two waves of beams of substantially monochromatic electromagnetic radiation, usually two monochromatic beams of light. The two light beams are generated so as to travel in opposite directions along a closed-loop path which typically, though not necessarily, encloses the input axis about which rotation is to be sensed. When the sensor is at rest, the lasing path is identical for the oppositely traveling beams resulting in the frequency of oscillation of each beam being identical. Rotation of the ring laser gyro, particularly rotation of the closed-loop path, about the input axis causes the effective lasing path length travelled by one beam to increase, while the effective lasing path length travelled by the other beam to decrease. The resulting change in path length of the two beams produces a frequency change in each of the beams, one increasing and the other decreasing, since the frequency of oscillation of the beam of electromagnetic radiation in such systems is dependent upon the effective length of the lasing path. The frequency difference between the two beams is therefore indicative of rotating rate of the beams of light, i.e. the rotation rate of the closed-loop path about the input axis. A frequency difference between the two beams results in a phase shift between the counter-travelling beams which changes at a rate proportional to the frequency difference. Thus, phase shift between the two beams is proportional to the time integral of the frequency difference, and is representative of the time integral of the input rotation rate about the gyro input axis. The total phase shift over a time interval is, therefore, indicative of the total angular displacement about the gyro input axis during the integrated time interval, and the rate of change of phase shift thereof is indicative of the rate of rotation about the gyro input axis.

A bothersome characteristic of the ring laser gyro is "lock-in". At rotation rates about the input axis of the ring laser gyro below some critical value called the lock-in threshold or lock-in rate, the frequency difference between the oppositely traveling beams synchronize to a common value resulting in the frequency difference being zero indicating no rotation at all. The lock-in characteristic arises due to mutual coupling between the oppositely traveling waves. The dominant source of the coupling is mutual scattering of energy from each of the beams into the direction of the other. The effect is similar to lock-in coupling effects which have been long understood in conventional electronic oscillators.

Of course, any inability to accurately measure low rotation rates reduces the effectiveness of a laser angular rate sensor in navigational systems. Thus, much developmental work has been conducted in the field of laser angular rate sensors for purposes of reducing or eliminating the effects of "lock-in" so that the laser angular rate sensor may be more effectively used in navigational systems. A major advancement in this area was disclosed in U.S. Patent 3,373,850, wherein a biasing system was provided which introduced a varying bias in the frequency of at least one of the counter-traveling beams of electromagnetic energy causing a varying frequency difference between the oppositely traveling beams of electromagnetic radiation, the bias being such that the varying frequency difference alternated in sign. The frequency bias so provided is such that there exists a frequency difference between the two oppositely traveling beams which is greater than the frequency difference which occurs near the lock-in rate for a majority of time. The sign or polarity of the frequency difference is alternated, typically periodically, so that the time integrated frequency difference between the two beams integrated over the time interval between sign reversals reversing from the same sign direction is substantially zero. Note that at those instances of time when the sign or direction of the frequency difference reverses, the two beams will tend to lock-in since at some point the frequency difference there between is zero. Since the gyro output angle is generally derived from the frequency difference which locks in to zero, even though there exists some rotation, an error accumulates in the gyro output angle. The periods of time when the two beams are "locked-in" usually are very short time intervals, and any possibly resulting gyro output angle error resulting therefrom is greatly reduced. Nevertheless, the error resulting from these periods of time during lock-in corresponding to each sign reversal of the frequency difference accumulate in the gyro output angle signal, and in time can amount to a bothersome level, particularly in precision navigational systems. This error is sometimes referred to as random walk or random drift.

The bias provided in such biasing systems as disclosed in U.S. Patent 3,373,650, is sometimes referred to as dither, and a ring laser gyro having such dither is referred to as a dithered gyro. Hereafter, a dithered gyro is one in which a bias is introduced into the frequencies of the counter-traveling beams whereby the frequency difference between the beams varies with time and alternates in sign. The alternation in sign need not be periodic in nature, i.e. not perfectly repetitious. The bias introduced may be provided by inertial rotation of the gyro (mechanical dithering) or may be provided by directly affecting the counter-traveling beams (electrical or optical dithering).

Many improvements have been made to the basic dithered gyro disclosed in U.S. Patent 3,373,650. One such improvement is disclosed in U.S. Patent 3,467,472 wherein the improvement consists of randomly changing the amount of bias introduced into the counter-traveling beams in order to reduce the random walk resulting from those time intervals when the frequency of the beams are locked-in.

Furthermore, from FR—A—2 360 885 an apparatus for minimizing laser angular rate sensor lock-in by optimal positioning of the beam path within the laser cavity is known. To this end the corner mirrors are used as beam loop shifting means, and their position is controlled by a signal indicative of the magnitude of the lock-in frequency. The output signal of the ring laser itself is not corrected for lock-in errors.

Finally, US—A—4 248 534 shows an apparatus for reducing lock-in effects in ring laser gyroscopes where this apparatus includes sensing means and phase angle determining. means. In order to reduce lock-in effects the gyroscope output is corrected for error caused by lock-in at the extremities of each oscillation when the dither velocity is equal to zero by accumulating the AC voltage outputs of a photodiode measuring the light intensity of the interference pattern at each zero dither velocity. When the accumulated phase error reaches $2\pi$, an overflow or borrow pulse is generated and added to the normal gyroscope output.

Departing from this prior art apparatus, it is the object of the present invention to devise an improved angular rate sensor which comprises an apparatus for precise determining a phase angle between the counter-propagating laser beams. This object is achieved according to the characterizing features of claim 1. Further advantageous embodiments of the sensor according to the invention may be taken from the dependent claims.

EP—A—0 069 365 (priority dates 06.07.81 and 15.01.82) also discloses an angular rate sensor (same applicant).

It is a further object of the present invention to provide an improved method for angular rate sensing. This object is achieved by the characterizing features of claim 23.

Summary of the invention

The present invention utilizes an incremental error parameter related to the instantaneous phase difference between the two counter-traveling beams of a ring laser angular rate sensor in order to generate a set of error parameters which correspond to the contribution of lock-in error included in the output of the sensor. The error parameters can be used for compensation of the gyro output for the lock-in error, or the parameters can be used in a control loop for indirectly reducing the error contained in the sensor output, or a combination of both error reduction and compensation.

Description of the drawings

Figure 1 is a block diagram of one embodiment of the present invention.

Figure 2 is a diagrammatic representation of a typical output scheme used in a ring laser gyro.

Figures 3a—b graphically illustrates the signals presented to the detector scheme shown in Figure 2.

Figure 4a is a graphical representation of lock-in error in a typical ring laser gyro output signal.

Figure 4b is a graphical illustration representing the combined beam intensity presented to the detector about a direction reversal of a dithered gyro.

Figure 4c is a graphical representation of the total phase shift change about a direction reversal of a dither gyro.

Figure 5 is a block diagram of a portion of a signal processing system of Figure 1.

Figure 6 is a block diagram showing further details of Figure 5.

Figures 7a—c are flow diagrams of the signal processing system of Figure 6.

Figure 8 is a timing diagram illustrating the signals of the systems shown in Figure 6 and Figure 7.

Figure 9 is a block diagram showing another embodiment of the present invention using feedback dither control.

Figure 10 is a diagrammatic representation of a biasing system.

Figure 11 is a graphical representation of the operation of the biasing system of Figure 10.

Figure 12 is a graphical representation of the control scheme of the system of Figure 9.

Figure 13 is a flow diagram of a signal processing system of Figure 9.

Figure 14 is another embodiment of the invention utilizing a feedback dither control.

Description of the invention

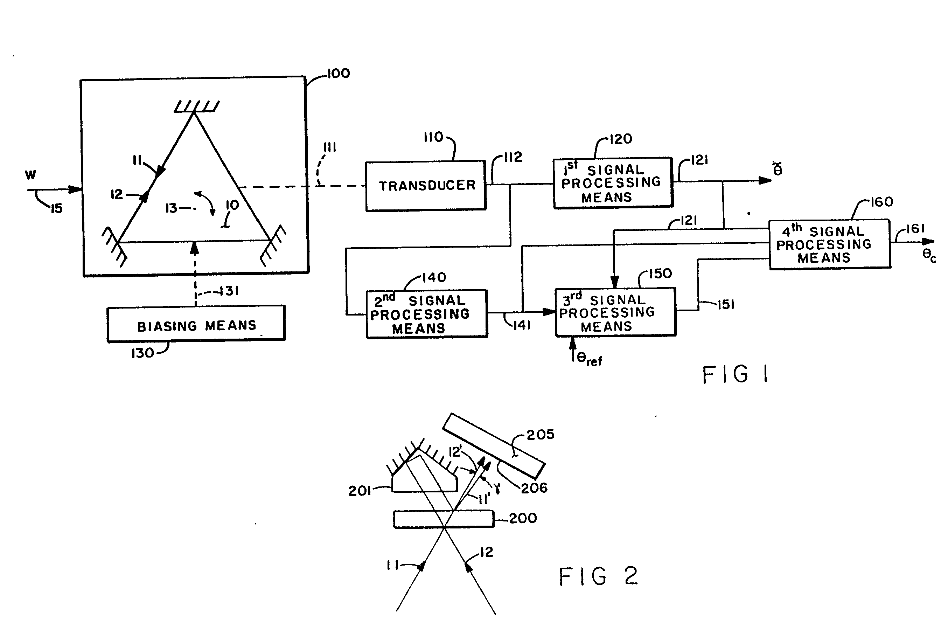

A general block diagram of the present invention is shown in Figure 1. Block 100 represents a ring laser gyro. Illustrated within block 100 is a triangular closed-loop path lying in a plane on a base, 10, for supporting an assembly of mirrors which form the closed-loop path. Beams of substantially monochromatic electromagnetic radiation traveling in opposite directions about the closed-loop path are indicated by arrows 11 and 12. Rotation is sensed about the input axis 13. Line 15 represents inertial space base motion which is to be sensed by ring laser gyro 100. Inertial space base motion is to be distinguished from any other motion which ring laser gyro 100 may be subjected to, for example, mechanical dithering, herein referred to as dither motion. The ring laser gyro configuration illustrated by block 100 in Figure 1 is similar to that described in U.S. Patent 3,373,650. Other ring laser gyro configurations different than that described by U.S. Patent 3,373,650 can be used with the invention of the present application. Although U.S. patent 3,373,650 shows a triangular closed-loop path, my invention is not restricted to such configuration, and may be applied to rectangular closed-loop paths as well, and other such closed-loop configurations.

3

EP 0 069 366 B1

Transducer 110 is shown coupled to ring laser gyro 100 through coupling means 111. Transducer 110 provides an electrical signal or signals which represent the characteristic behavior of one or both of the counter-traveling beams. The electrical signals provided by transducer 110 provide sufficient information about the counter-traveling beams in order to ascertain the rotation about axis 13 of ring laser gyro 100. For example, transducer 110 can provide electrical signals indicative of the instantaneous phase difference between the two counter-traveling beams from which rotation information can be derived. A more detailed description of transducer 110 is provided below with reference to Figure 2.

Electrical signals provided by transducer 110 are coupled to first signal processing means 120 and second signal processing means 140 through transducer output connecting means 112. First and second signal processing means 120 and 140 can be combined in a single processing unit but are shown separated in Figure 1 for exposition purposes.

First signal processing means 120 is responsive to selected ones of electrical signals provided by transducer 110 on connecting means 112. First signal processing means processes the information provided by transducer 110 and provides an output signal representative of the rotation about the laser gyro input axis 13. The information so provided by transducer 110 is the response of the counter-traveling beams caused by any rotation, i.e. inertial space base motion 15 and/or dithering, or any disturbance affecting the counter-traveling beams including optical biasing such as provided by a dithered Faraday cell as disclosed in U.S. patent 3,373,650. The first signal processing means output signal includes a lock-in error caused by the lock-in phenomenon inherent in sensors of the class described. First signal processing means is well known in the art and is disclosed in the above referred to patents, and will not be described in detail.

As indicated earlier, disclosed U.S. Patent 3,373,650 is a ring laser gyro in which the frequencies of the two counter-traveling beams of light are provided with a periodically reversing or altering bias so that a time varying frequency difference exists therebetween for a majority of the time so that the time integrated frequency difference between the two beams of light is substantially zero after one complete cycle of the periodically alternating bias. Shown in Figure 1 is a biasing means indicated by block 130 coupled to ring laser gyro 100 through coupling means 131 for introducing a time varying bias in the frequency of at least one of the counter-traveling beams thereby causing a time varying frequency difference between the two counter-traveling beams which alternates in sign. The bias provided by biasing means 130 need not be periodic, that is, perfectly repetitious, but rather provide a bias which causes the frequency difference between the counter-traveling beams to change sign in regular, though not necessarily periodic, intervals. For purposes of ease of exposition, and as a matter of practicality, biasing means 130 will hereafter be considered periodic in nature.

As disclosed in U.S. Patent 3,373,650, the periodically alternating bias may be achieved mechanically by providing a real rotational motion of the gyro about the input axis, or may be achieved by directly effecting a frequency change in the two counter-traveling beams by, for example, directly affecting the lasing path or lasing medium, these methods being referred to in U.S. Patent 3,373,650 as electrically providing a bias. Thus, the biasing means shown by block 130 may be of the mechanical or electrical variety providing the periodically alternating bias.

Second signal processing means 140 is responsive to selected ones of electrical signals also provided bk transducer 110 on output connecting means 112. First and second signal processing means, 120 and 140 respectively, may respond to the same signals of different signals provided by transducing means 110. Second signal processing means 140 responds to signals presented on connecting means 112 from transducer 110 and determines lock-in error parameters indicative of the lock-in error included in first signal processing means 120 output signal.

Second signal processing means 140 provides output signals representative of the lock-in error parameters to a third signal processing means, 150, through connecting means 141. Third signal processing means also receives output signals from first signal processing means 120, through connecting means 121, and signals representative of some arbitrary known angular rotations indicated by θ REF. Using these input signals, third signal processing means determines a characteristic signature of the particular ring laser gyro connected in the system. The signals indicated by θ REF may be, by example, actual magnitudes of discrete rotations of the sensor such as the earth's rotation, or may be some characterized input such as a ramp or the like. A detailed description of the second and third signal processing means, 140 and 150 respectively, and the lock-in error parameters and characteristic signature is provided below.

Signals representative of the lock-in error parameters provided by second signal processing means 140 and signals representative of the characteristic signature of the gyro provided by the third signal processing means 150 are presented to a fourth signal processing means 160 through connecting means 141 and 151 respectively. Fourth signal processing means 160 also receives signals from first signal processing means 120 through connecting means 121. Signals on connecting means 121 from first signal processing means 120 represent the gyro output including lock-in and other errors. Fourth signal processing means 160 combines the uncorrected gyro output data presented on connecting means 121, the lock-in error parameter signals presented on connecting means 141 from second signal processing means 140, and signals indicative of the characteristic signature of the gyro presented on connecting means 151 from third signal processing means 150, and provides an output signal indicative of the rotation of ring laser gyro 100 corrected for lock-in error. The corrected gyro output signal is provided by fourth signal

4

processing means 160 at output terminating means 161. Fourth signal processing means 160, of course, can be combined with first, second, and third signal processing means 120, 140, and 150 respectively but have been distinguished from each other for exposition purposes.

The laser gyro assembly indicated by block 100 in Figure 1 generally consists of a lasing medium providing two substantially monochromatic beams or waves of electromagnetic energy in the form of beams of light, a plurality of reflectors or mirrors defining a closed-loop path and an enclosed area, the two beams of light being directed to travel along the closed-loop path in opposite directions. One means of monitoring the behavior of the counter-traveling beams in order to determine the frequency difference therebetween, which is indicative of the rotation of the closed-loop path, is a system substantially shown in Figure 2. One of the mirrors forming the closed-loop path in ring laser gyro 100 is slightly transparent and is indicated in Figure 2 by mirror 200. The system shown in Figure 2 is described in more detail in U.S. Patent 3,373,650 and will be briefly described here.

Referring to Figure 2, a portion of the energy in beam 12 passes through mirror 200 and travels through combiner right angle prism 201 and reflects off of the backside of mirror 200 at the exit point where a portion of the energy of beam 11 passes through mirror 200. A portion of energy from beam 11 exiting from mirror 200 is indicated by beam 11', and the portion of energy of beam 12 reflecting off the backside of mirror 200 is indicated by beam 12'. The optical geometry of mirror 200 and right angle prism 201 is such that beams 11' and 12' are at a slight angle with each other. In these circumstances, an interference pattern is created on the surface 206 of detector 205. As is well known, the intensity of light on surface 206 is indicative of the instantaneous phase shift between the two counter-traveling beams 11 and 12, when laser gyro 100 is not rotating, the intensity at any point on the surface 206 remains constant. In the presence of rotation above the lock-in rate, the intensity changes with time between maximums and minimums at a rate proportional to the rotation rate sensed by laser gyro 100. In this manner, optical information is presented on the surface 206 of detector 205 for transduction into different signals such as electrical signals. The functions of mirror 200 and right angle prism 201 essentially make up one example of coupling means 111; detector 205 and the surface thereof, 206, essentially make up one example of transducer 110. One example of a detector using such a coupling means as just described will now be presented.

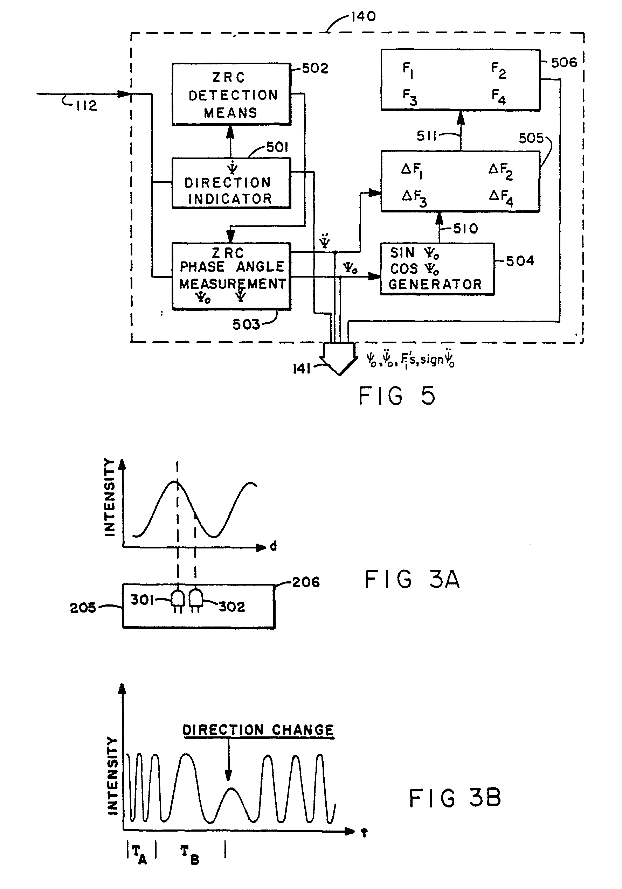

Transducer 110 may be provided by one or more photodetectors positioned at the surface 206 of detector 205 shown in Figure 2 and is more fully illustrated in Figure 3a. Shown in Figure 3a is detector 205 consisting of photodetectors 301 and 302. Indicated directly above photodetectors 301 and 302 is a graphical representation of a typical interference pattern that can be created on surface 206 by energy beams 11' and 12'. The graphical illustration is a plot of intensity of the combined beams versus distance along the surface 206 that may be observed by photodetectors 301 and 302. Although a single photodetector can be used to obtain rate of rotation information, a second photodetector is usually required to determine rotation direction. The combined beam intensity measured at the surface at a particular point on the surface of 206 gives a relative indication of the instantaneous phase difference between the two counter-traveling beams 11 and 12. This "relative phase difference" is clearly exemplified by noting the difference in intensity measured by photodetector 301 compared with the intensity measured by photodetector 302, two different points on the surface 206. The intensities measured by photodetectors 301 and 302 are, of course, relative since they depend upon the position on the surface 206.

In the presence of rotation, the interference pattern moves with time as indicated in Figure 3b. Figure 3b is a graphical representation of the intensity measured, for example, by only photodetector 301 versus time. Note that the relatively fast rate of change of intensity indicated in the time interval indicated by TA is faster than the rate indicated during a time interval indicated by TB. The faster rate of change of intensity during time interval TA indicates a greater rotation rate than during time interval TB. In operation, the photodetector in transducer 110 will provide electrical signals directly related to the intensity of the interference pattern created on the surface 206. These signals are usually amplified and processed to determine the rotation rate about the axis 13 of ring laser gyro 100 as well as the angular displacement during selected time intervals for determining navigational position. As is indicated in Figure 1, first signal processing means 120 provides the function of processing the electrical signals and having as an output the gyro output angle. Since the output signal of first signal processing means 120 is derived from the frequency behavior of the counter-traveling waves, the output signal thereof will include lock-in error.

One example of first signal processing means 120 for determining such information is a signal processing system which counts the interference pattern intensity maximums or minimums or portions thereof from at least one photodetector. The information is further processed as to rate of change of such maximums or minimums as well as whether they are in a positive or negative direction based on information from a second photodetector such as photodetector 302. In a dithered gyro, first signal processing means 120 generally will have the capability of filtering out the bias introduced into the frequency difference of the two counter-traveling beams which is introduced by biasing means 130. Examples of first signal processing means are disclosed in U.S. Patent 3,373,650 and U.S. Patent 3,627,425. The output of first signal processing means is a signal representative of at least the angular displacement about the gyro input axis 13 derived from signals representative of the behavior of the two counter-traveling beams therein. Hereafter, the output signal provided by first signal processing means, representative of gyro angular displacement or gyro output angle is referred to as the gyro output signal or simply "gyro output" and includes lock-in error.

5

In one embodiment of the invention, electrical signals, such as those presented to the firest signal processing means 120 from, for example, photodetectors 301 and 302, are utilized to obtain lock-in error information in order to process the gyro output signal provided by first signal processing means and produce navigational information corrected for lock-in error.

To further understanding of the invention, an explanation of the nature and behavior of a dithered ring laser gyro is necessary. Ring laser gyros are sometimes referred to as integrating rate gyros. That is, the rotation rate is integrated for determining positional information with regard to the angular rotation about the input axis. This may be expressed by the following equation:

$$(1) \qquad \dot{\theta}=S\dot{\psi}=S[f2-f1]$$

where:

$f_2$, $f_1$ are the individual frequencies of the two counter-traveling beams;
S is a scale factor;
$\dot{\psi}$ is the rate of change in phase between the two counter-traveling beams; and
$\theta$ is the gyro output angle, and $\dot{\theta}$ is the gyro output rate.
If the phenomenon of lock-in or other disturbances did not exist, then:

$$(2) \qquad \dot{\theta}=\omega_{in}$$

where $\omega_{in}$ is the true or actual inertial rotation rate about the input axis regardless of the source.

However, because of lock-in, the gyro output rate contains an error due to at least lock-in. One mathematical expression which substantially describes the effects of lock-in upon the gyro output rate determined by the first signal processing means is represented by the following equation:

$$(3) \qquad \dot{\theta}=\omega_{in}-\Omega_L\sin(\psi+\beta)$$

where:

$\psi$ is the instantaneous phase angle between the two counter-traveling beams.
$\Omega_L$ is the lock-in rate;
$\beta$ is a phase angle measurement offset of the instantaneous phase angle $\psi$ and is presumed constant.
In equation (3), $\dot{\theta}$ is related to rate of change in $\psi$, $\dot{\psi}$, by the sensor scale factor:

$$\dot{\psi}=K\dot{\theta}$$

Further, the value of $\beta$ is dependent upon the placement of a defined reference photodetector for determining the instantaneous phase angle, $\psi$. This is so since the reference photodetector can be placed anywhere with respect to the interference pattern. Once the optical system is established, $\beta$ is presumed constant.

The following analysis is directed to the quantification of the incremental lock-in error generated in a dithered ring laser gyro system so as to arrive at a means for accumulating a total lock-in error associated with the gyro output angle provided by first signal processing means 120. And so, the lock-in error term in equation 3 is rewritten for exposition purposes in equation (4).

$$(4) \qquad \delta\dot{\theta}=-\Omega_L\sin(\psi+\beta)$$

The transcendental expression for the gyro output angle rate shown in equation (4) is a function of the instantaneous phase angle between the two counter-traveling beams, a function of the sensor lock-in rate, and the phase angle measurement offset. In order to attempt a solution to equation (4) yielding an actual quantity of lock-in error rate, a time varying expression for the value of $\psi$ is first obtained.

Consider a biasing system similar to those disclosed in U.S. Patents 3,373,650 and 3,467,472. In a mechanical biasing system, base 10 of ring laser gyro 100 is mechanically rotated in a back and forth motion in a periodic manner resulting in the frequency difference between the two counter-traveling beams to vary in a sinusoidal manner, periodically alternating in sign. In these circumstances, the instantaneous phase angle between the two counter-traveling beams continually increases in magnitude with time as base 10 is rotated in one direction. At the instance that the direction of rotation changes from one direction to the opposite direction, the time varying frequency difference tends toward zero.

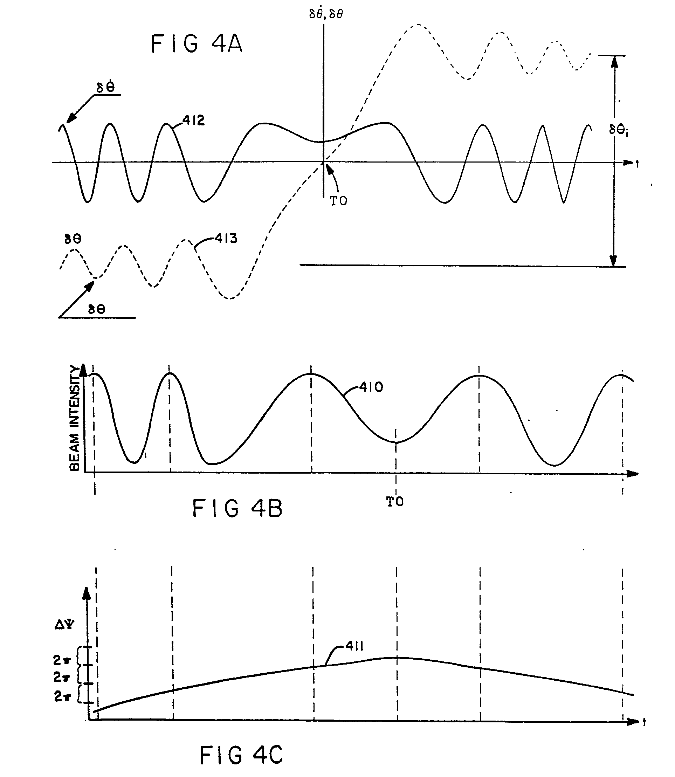

Figure 4a graphically illustrates the error resulting from the relation described in equation (4) for a dithered gyro in the region of rotation direction reversal. Curve 412 plots the error in the gyro rate output $\delta\dot{\theta}$ against time, showing a decreasing frequency before the reversal occurring at time T0, and an increasing frequency thereafter. The essentially constant amplitude of curve 412 is dependent on the sensor's characteristic lock-in rate, $\Omega_L$. Curve 413 plots the error in the gyro angular output, $\delta\theta$, which is obtained by integrating curve 412. As shown, the gyro angular error is oscillating with varying frequency and amplitude before and after the change of direction, and exhibits a step through an incremental error angle $\delta\theta_i$ across the change of direction. As may be seen from Figure 4a, the error resulting from equation (4) is always

6

present, but has its most important effect when a change of direction occurs. For a periodic sinusoidal dithered ring laser gyro, such a change of direction occurs twice each dither cycle, and such an error as described on curve 413 occurs at each change of direction. Unfortunately, these lock-in errors are not necessarily equal in magnitude nor always opposite in sign in an ordinary biasing system of the prior art, leading to a build-up of error in the gyro output sometimes referred to as random drift or random walk.

The discussion presented just above and Figure 4a was described for a mechanically dithered gyro. Nevertheless, the characteristics of a sensor optically or electrically dithered are similar to those already presented, and therefore will not be discussed in the following discussion.

Curve 410 in Figure 4b graphically illustrates the intensity of the combined beams 11' and 12' producing the interference pattern observed by, for example, photodetector 301 shown in Figure 3a as well as the output electrical signal thereof about the instant of time T0 illustrated in Figure 4a. As described earlier, curve 410 essentially indicates the instantaneous phase angle $\psi$ plus the measurement offset phase angle $\beta$. From curve 410, the change in instantaneous phase angle between the two counter-traveling beams can be obtained since the instantaneous phase angle thereof changes $2\pi$ radians between two successive intensity maximums or two successive intensity minimums as observed by photodetector 301. A plot of the total $\Delta\psi$, the change in gyro output angle about T0 is graphically illustrated in Figure 4c, curve 411. Note that the rate of change of the instantaneous phase angle between the two counter-traveling beams gradually decreases until time T0, at which time the frequency difference reverses polarity and the mechanical rotation changes direction. At times greater than T0 the rate of change in $\psi$ increases until an instant of time is reached which corresponds to the maximum negative frequency difference.

At times about T0, instances of sign reversal of the frequency difference, the gyro input angular acceleration can be presumed to be essentially constant, and, therefore, the second derivative of $\psi$ is presumed to be substantially constant and is related by:

$$(5) \qquad \ddot{\psi}_o = K\dot{\omega}_o$$

where:

$\dot{\omega}_o$ is the input angular acceleration resulting from the total motion applied to the sensor and includes dither motion, and

K is a proportionality constant or scale factor.

As will be described below, the incremental error angle $\delta\theta_i$ can be expressed as a function of the phase angle $\psi$ and the angular acceleration $\ddot{\psi}$ that exists at the instant that direction reverses, at which time the rate $\dot{\psi}$ is zero. Because of its importance to describing the error growth, the point of direction reversal, $\dot{\psi}$ being zero, will be called the zero rate crossing (ZRC), the instantaneous phase angle between the counter-traveling beams at the ZRC will be called the ZRC phase angle $\psi_o$, and the corresponding second time derivative of $\psi$ will be called the ZRC anglular acceleration $\ddot{\psi}_o$.

The first assumption in and discussion which follows is that $\ddot{\psi}$ in the region of the ZRC is essentially constant. The second assumption is that the error can be described by events in the region of the ZRC and that the incremental angle error occurring at one ZRC is independent of all others. Based on the first assumption the following quadratic expression for $\psi$ may be obtained:

$$(6) \qquad \psi = \psi_o + \frac{\ddot{\psi}_o(t-t_o)^2}{2}$$

where

t is time

$t_o$ is the time at the ZRC

$\psi_o$ is the instantaneous phase angle as indicated by one of the photodetectors at the ZRC

$\ddot{\psi}_o$ is the second derivative of $\psi$ at the ZRC.

Making a change of variables on time, and substituting equation (6) into (4) yields:

$$(7) \qquad \delta\dot{\theta} = -\Omega_L \sin[\psi_o + \beta + x^2(\mathrm{sign}\ddot{\psi}_o)]$$

where

$$x = (t-t_o)\sqrt{\frac{|\ddot{\psi}_o|}{2}}$$

Applying the second assumption described above, the incremental angle error from a single ZRC can be obtained by integrating equation (7) over all time. That is for the $i^{th}$ ZRC,

$$(8) \qquad \delta\theta_i = \int_{-\infty}^{+\infty} \delta\dot{\theta}\, dt$$

7

To accomplish the integration indicated by equation (8), the Fresnal integral property of:

$$(9) \qquad \int_0^\infty \sin x^2 \, dx = \int_0^\infty \cos x^2 \, dx = \sqrt{\frac{\pi}{8}}$$

must be applied, yielding:

$$(10) \qquad \delta\theta_i = \Omega_L \sqrt{\frac{\pi}{|\dot{\psi}_o|}} \{\sin(\psi_o + \beta) + \cos(\psi_o + \beta)[\text{sign } \dot{\psi}_o]\}$$

Equation (10) describes the angular error increments $\delta\theta_i$ from a single passage through zero rotation rate during one-half of a dither angle. The incremental error, $\delta\theta_i$, is included in the output of first signal processing means 120, and accumulates in the output thereof. The sign of $\dot{\psi}_o$ is indicative of which half of the dither cycle the error is accumulated. Equation (10) can be rewritten keeping track of dither cycle polarity, and is presented in equations (11a) and (11b) which describe the incremental angular error from a single passage through zero rotation rate when $\dot{\psi}_o$ is positive and negative rspectively.

$$(11a) \qquad \delta\theta_i^+ = C_1 \Delta F_1 + C_2 \Delta F_2$$

$$(11b) \qquad \delta\theta_i^- = C_3 \Delta F_3 + C_4 \Delta F_4$$

where

$$(12a) \qquad C_1 = C_4 = -\sqrt{\pi}\Omega_L(\cos\beta + \sin\beta)$$

$$(12b) \qquad -C_2 = C_3 = \sqrt{\pi}\Omega_L(\cos\beta - \sin\beta)$$

and where

$$(13a) \qquad \Delta F_1 = \frac{\cos\psi_o^+}{\sqrt{|\dot{\psi}_o^+|}}$$

$$(13b) \qquad \Delta F_2 = \frac{\sin\psi_o^+}{\sqrt{|\dot{\psi}_o^+|}}$$

$$(13c) \qquad \Delta F_3 = \frac{\cos\psi_o^-}{\sqrt{|\dot{\psi}_o^-|}}$$

$$(13d) \qquad \Delta F_4 = \frac{\sin\psi_o^-}{\sqrt{|\dot{\psi}_o^-|}}$$

with the symbols and organization of these equations arranged for exposition purposes which will be described below.

The superscript "+" indicates that the incremental angle error is described for the ZRC in which $\dot{\psi}_o$ is positive, and the superscript "−" indicates that the error is described for the ZRC in which $\dot{\psi}_o$ is negative.

Making the assumption that each laser gyro has an $\Omega_L$ and $\beta$ which are essentially constant, the coefficients $C_1$, $C_2$, $C_3$, and $C_4$ may also be regarded as essentially constant, and representing the characteristic signature of a particular laser gyro. Although the relation between $C_1$ and $C_4$ shown in equation (12a) and between $C_2$ and $C_3$ shown in equation (12b) are a consequence of the derivation, these coefficients are separately defined to allow differences that may exist between the "+" and "−" ZRC's.

Equations (11a) and (11b) quantitatively describe the incremental lock-in error in the gyro output angle typically found in prior art systems.

Equations (13a) through (13d) are defined as the incremental error parameters which contribute to the total lock-in error as expressed by the incremental lock-in error in equations (11a) and (11b). The coefficients in equations (12a) and (12b) are defined as the characteristic signature coefficients of a particular laser gyro. The contribution of lock-in eerror accumulated in the gyro output of first signal processing means 120 occurs during each half dither cycle and is related to a trigonometric function of the value of the instantaneous phase angle between the counter-traveling beams, $\psi$, occurring at each sign reversal of the frequency difference between the two counter-traveling beams multiplied by the appropriate characteristic signature coefficients as indicated by equations (11a) through (12b).

Hereafter, the value of the relative instantaneous phase angle between the counter-traveling beams, $\psi$, which occurs at the instant when $\dot{\psi}$ is zero is designated as the Zero Rate Crossing (ZRC) phase angle, $\psi_o$.

It is important to note that the zero rate crossing is responsive to, and dependent upon the total rotational motion about the gyro input axis, and includes both inertial space rotation and dither motion. Although the discussion so far presented and the discussion which follows utilizes a mechanical dither, an electrical biasing means, as indicated above, has also a corresponding ZRC phase angle which occurs at substantially the instant of time when the frequency difference between the counter-traveling beams changes sign. Thus, a similar set of mathematical expressions, like those of (11a) and (11b), can be generated which involve the corresponding ZRC phase angle in these situations and one or more characteristic signature coefficients from which the contribution of error due to lock-in can be determined.

Having quantified the incremental lock-in error generated in each dither cycle, a continuously corrected output angle may be generated using the ordinary gyro output angle modified by the total or accumulated lock-in error contained therein, and is expressed in equation 14:

$$\theta_c = \tilde{\theta} - \sum_{i=1}^{m} (\delta\theta_i^+ + \delta\theta_i^-)$$

(14)

$$\theta_c = \tilde{\theta} - \sum C_i F_i$$

In the example presented, $i = 1, 2, 3,$ and $4$. Further,

(15)
$$F_i = \sum_{j=1}^{m} \Delta F_{ij}$$

where the $F_i$'s in equation (15) are obtained by summing the $\Delta F_{ij}$'s for each of the ZRC's that occur during the collection interval of $\tilde{\theta}$, where $\tilde{\theta}$ is the measured gyro output, which is the detected integral of rate, and $\theta_c$ is the gyro output after correction for lock-in. The $\Delta F_{ij}$'s and $C_i$'s are defined by equations (12) and (13) respectively.

The $F_i$'s expressed in equation 15 are defined as the lock-in error parameters, each being related to the summation of the incremental error parameters and accumulate with each passing ZRC in a manner corresponding to the accumulation of lock-in error in the gyro output angle, namely, the output of first signal processing means 120.

It is important to distinguish between $\theta_c$ and $\tilde{\theta}$. $\tilde{\theta}$ is determined from the heating of the two counter-traveling beams indicated by the interference pattern on surface 206 as described with reference to Figure 2, and indicated at output of first signal processing means 120 in Figure 1. The output signal on connecting means 121 represents $\tilde{\theta}$. The interference pattern created and the rate of change thereof includes the lock-in error. Correction of the measured value, $\tilde{\theta}$, is accomplished in the present invention by ascertaining the value of the instantaneous phase angle between the two counter-traveling beams at the instant of sign reversal of the frequency difference corresponding to $\dot{\psi}$ being zero-the instant of $\dot{\psi}$ being zero resulting from rotation provided by bias and inertial input rotation—and ascertaining the values of the characteristic signature coefficients, $C_1$, $C_2$, $C_3$, and $C_4$, (hereafter referred to only as coefficients), which are a function of $\Omega_L$ and $\beta$ as indicated by equations (12a) and (12b). The corrected gyro output $\theta_c$ is indicated in Figure 1 at the output of fourth signal processing means 160 at output 161.

Since each ring laser gyro will have different light scattering characteristics which contribute mostly to the lock-in phenomenon, the characteristic signature coefficients represent the characteristic signature of a particular ring laser gyro and biasing system. Thus, the coefficients must be determined empirically for each gyro for the best error correction scheme. Although an estimate of the coefficients based on long term data collection or the like would also work in theory, an estimate would not provide the most precise of the two methods for obtaining lock-in error, and lock-in error correction.

Error correction in the present invention is obtained by (i) a means for determining the ZRC phase angle and the second derivative thereof; (ii) a means for determining incremental error parameters, namely, summing trigonometric functions of each ZRC phase angle; and (iii) a means for characterizing the sensor, namely, empirically determining the characteristic signature coefficients based on a series of measurements of gyro output angle and ZRC phase angle, and performing a linear regression or similar estimation processes and the like for determining the coefficients.

Note, in order to obtain useful coefficients characterizing the sensor, the sensor must be perturbed in a manner which will cause distinguishing characteristics in the lock-in error parameters, allowing separation of the coefficients during the regression process.

Examples of sensor perturbation include random noise in the dither, controlled input base motions such as ramping, or the like.

In the embodiment of the invention shown in Figure 1, second signal processing means receives electrical signals from transducer 110 through connecting means 112 as indicated earlier. Second signal processing means requires electrical signals which are indicative of the instantaneous phase angle between the two counter-traveling beams and can be obtained by way of example from the interference pattern created on the surface 206. Photodetectors 301 and 302 provide electrical signals which satisfy the requirement of providing phase information to second signal processing means, 140.

Second signal processing means 140 responds to electrical signals representative of the instantaneous phase angle between the counter-traveling beams and (i) determines the instantaneous phase angle relative to some fixed spatial reference (measurement offset, $\beta$) at the instant of sign reversal of the frequency difference (i.e. direction reversal), $\psi_o$, and the value of $\dot{\psi}_o$; (ii) determines the sign direction of the frequency difference or the sign of $\dot{\psi}$; and (iii) generates the sine and cosine values of the zero rate crossing phase angle, $\psi_o$. Second signal processing means, 140, in combination with electrical signals from transducer 110, indicative of the behavior of the counter-traveling beams, provides the incremental error parameters which are a function of the lock-in error or light scattering errors, information of which is contained in the characteristic behavior of the counter-traveling beams, and determines lock-in error parameter and signals indicative thereof for subsequent signal processing.

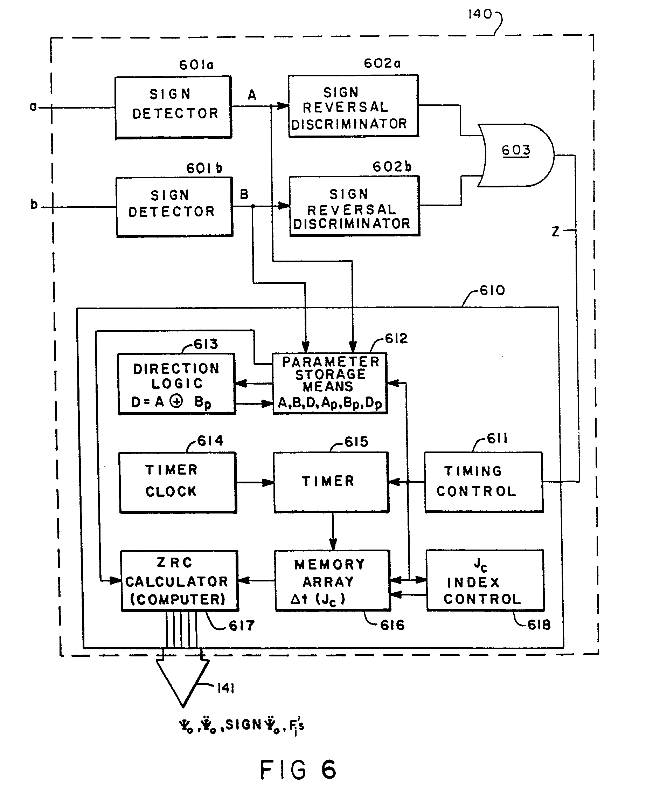

Figure 5 is a general block diagram describing the functions of second signal processing means 140 of Figure 1. Referring to Figure 1 and Figure 5, second signal processing means, 140, receives signals from transducer 110 through connecting means 112. Electrical signals on connecting means 112, as indicated earlier, are representative of the instantaneous phase difference between the two counter-traveling beams. By way of example, the electrical signals may be the output of two photodetectors 301 and 302 as shown in Figure 3a. These signals are monitored by direction indicator 501 which provides a signal indicative of the sign direction of $\dot{\psi}$. A zero rate crossing (ZRC) phase angle detection means, 502, coupled to direction indicator 501, provides a signal at approximately the instant of direction change indicated by direction indicator 501. A ZRC phase angle measurement means 503 is coupled to ZRC detection means 502 and connecting means 112 for obtaining a measurement of the ZRC phase angle and corresponding second derivative derived from signals on connecting means 112 from transducer 110. The output of the zero rate crossing phase angle measurement means, 503, is coupled to a sine-cosine value generator 504 which provides output signals representative of the sine and cosine value of each ZRC phase angle. These signals are presented to a calculator 505 for determining the incremental error parameters indicated by equations (13a) through (13b). In turn, the incremental error parameters are presented to storage and summing means 506 through connecting means 510. Storage and summing means 506 keeps a continuous record of the sum of incremental error parameters and provide the sums thereof, being the lock-in error parameters indicated by equation (15). The lock-in error parameter signals are presented in third signal processing means, 150, through connecting means 141. These signals are utilized for generating the sensor characteristic signature coefficients.

Third signal processing means 150 generates the signature coefficients based on known rotation rates which the gyro is subjected to, and lock-in error parameters provided by the summing and storage means 506 of the second signal processing means 140. A detailed explanation of third signal processing means 150 follows.

The lock-in error parameters signals provided by storage and summing means 505, being trigonometric functions of the ZRC phase angle, and the coefficients provided by third signal processing means 150 are combined in fourth signal processing means, 160 with the output angle provided by first signal processing means 120 for providing a signal corresponding to the corrected gyro output angle according to equation (14).

A detailed description of second, third, fourth, and fifth signal processing means will now be described.

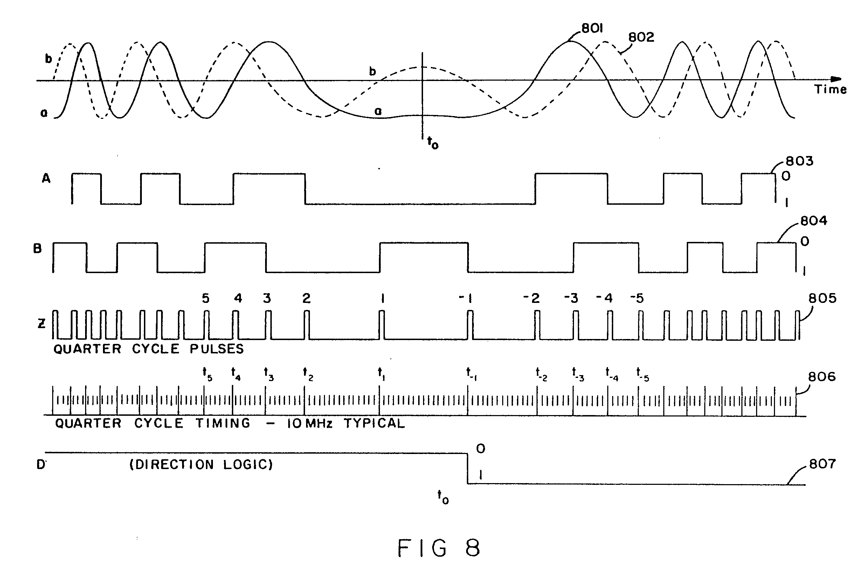

Consider the output of detectors 301 and 302 being represented by signals "a" and "b", these outputs being graphically illustrated in Figure 8 by curves 801 and 802. The ZRC phase angle and direction can be obtained from information supplied by either of or both photodetectors 301 and 302. With photodetectors 301 and 302 separated by one-quarter of a fringe spacing of the interference pattern generated on surface 206, the output signals of photodetectors 301 and 302 will be in phase quadrature. Arbitrarily designating the output of photodetector 301 as "a" and the output of photodetector 302 as "b", an expression for their outputs can be represented by:

$$(16) \qquad\qquad a = \sin(\psi)$$

$$(17) \qquad\qquad b = \cos(\psi + \phi)$$

where $\psi$ is the instantaneous phase angle between the counter-traveling beams offset by $\beta$ defined above, and $\phi$ being error in the orthogonality (1/4 of a fringe) established by the physical positioning of the photodiodes. In the detection system exemplified by equations (16) and (17), the zero reference occurs when signal "a" is zero and signal "b" is positive. The value of $\phi$ is attributed to the alignment spacing error of separating the photodetectors 301 and 302 by exactly one-quarter of a fringe spacing.

One approach to obtain $\psi$ at the ZRC instant, the point at which $\dot{\psi}$ equals zero, is to measure the times between sign changes of the "a" and "b" signals and employ the approximation that $\dot{\psi}$ is nearly constant in the region of ZRC. By knowing the elapsed time between when, for example, "a" is zero and going positive, and when "b" is zero, for each of several sign changes of "a" and "b", a determination of the value of ZRC phase angle, $\psi_o$, can be made.

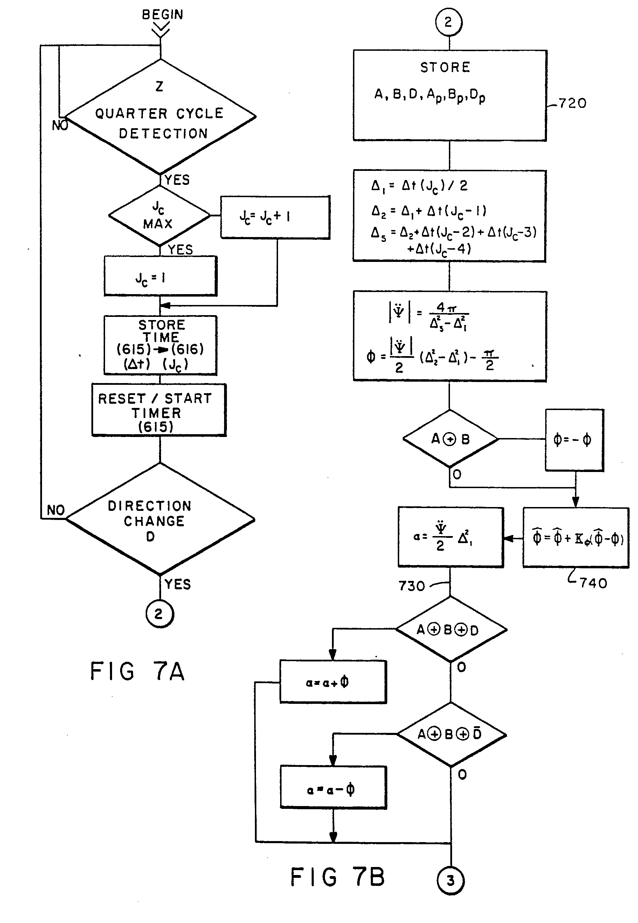

A more detailed showing of the block diagram of Figure 5 describing second signal processing means 140 is shown in Figure 6 and corresponding flow diagrams shown in Figures 7a—c. The primary purpose of the second signal processing means is to determine the lock-in error parameters based on the value of the ZRC phase angle. Referring now to Figure 6, the output of photodetectors 301 and 302 represented by "a" and "b" are passed through sign detectors 601a and 601b respectively. The output of the sign detectors is a digital representation of the polarity of the input signals "a" and "b", where a high voltage level represents a logical zero corresponding to a positive polarity of the input signal, and a low voltage level represents a logical one corresponding to a negative polarity of the input signal. The output of sign detectors 601a and 601b are A and B respectively, becoming the digital representation of the polarity of input signals "a" and "b" respectively. The output of sign detectors 601a and 601b are individually passed through sign reversal discriminator blocks 602a and 602b respectively, each having as outputs a pulse, of small width, each time the input signals A and B respectively change polarity. The output of sign reversal discriminator 602a and the output of sign reversal discriminator 602b are imputs to an OR circuit 603, and output of which is designated Z. In the presence of rotation about the gyro input axis, the output of OR circuit 603 is a series of pulses representing a change in polarity of either input signal "a" or input signal "b". The output signal Z becomes a quarter cycle timing generator as will be further explained.

Sign detectors 601a and 601b, and sign reversal discriminators 602a and 602b can be constructed in a variety of ways made up of simple signal comparators, pulse edge discriminators, pulse shapers, and the like, and therefore are not described herein.

Shown in Figure 8 is a graphical representation of the input signals "a" and "b" indicated by curves 801 and 802 respectively, the output of sign detectors 601a and 601b shown as signals A and B respectively by curves 803 and 804 respectively prior to, and just after, a sign reversal of $\psi$ or ZRC at time T0. Curve 805, shown in Figure 8, is a graphical representation of the quarter cycle output pulses, Z, of OR-gate 603 providing pulses at each occurrence of a change in state in either of signals A or B corresponding to a change in polarity of input signals "a" and "b" respectively. The numbers just above curves 805 are reference numerals for designating quarter cycle time events of signals "a" and "b". Also indicated in Figure 8 is the instant of time T0 where a $\psi$ sign reversal occurs, which is the ZRC instant of time. This will be explained in detail below.

For purposes of discussion, time to the left of T0 in Figure 8 corresponds to the situation where $\psi$ is positive and $\dot\psi$ is negative. As indicated earlier with reference to Figures 3a and 3b, a full cycle of either signal "a" or "b" corresponds to a phase change of $2\pi$ radians between the two counter-traveling beams, a half-cycle corresponding to a phase angle change of $\pi$ radians. Assuming, for this discussion, that the value of $\phi$, the orthogonality constant, is zero, the time elapsed between the event of A changing logic state and then B changing logic state, or vice versa corresponds to a phase angle change between the counter-traveling beams of $\pi/2$ radians. Defining the time period elapsed between known changes in state of A and B as phase angle quadrants, information supplied by signals A and B, and the quarter cycle pulses, Z, can be utilized to determine the ZRC phase angle at time $\pi 0$.

The ZRC phase angle may be represented by a number, of $\pi/2$ quadrants plus an angle $\alpha$ where $\alpha$ is defined to be the amount of phase change in the last quadrant entered before the sign of $\psi$ changes. For the example indicated in Figure 8 on curves 801 and 802, the last quadrant occurs after point "1" where signal "b", curve 802, has a zero value and is rising.

Assuming, as indicated earlier, that $\dot\psi$ at the ZRC crossing is substantially constant, and utilizing the mathematical expression for $\psi$ expressed in equation (6), the unknown angle $\alpha$ and the value of $\dot\psi_o$ can be determined in terms of elapsed time between changes of state between signals A and B.

Defining j, by timing reference points as indicated above curve 805, and $t_j$ as the time of the change of state of either A or B as indicated above curve 806, the following mathematical expression relating $\alpha$ to the elapsed time and $\dot\psi$ can be written

$$\text{(18)} \qquad \alpha + (j-1)\frac{\pi}{2} = \frac{|\dot\psi_o|}{2}(\Delta_j)^2 \quad \text{for } j = 1,\, 2,\, 3, \ldots$$

where:

$$\Delta_j = t_o - t_j,$$

and

$$t_o = \frac{t_1 + t_{-1}}{2}$$

This employs the approximation that $t_o$ is at the midpoint between the change of state of either A or B

11

immediately before the change of direction and the corresponding change of state immediately after the reversal. Equation 18 can be solved in terms of quarter cycle times called $\Delta t_j$, which are based on counting a high frequency clock between quarter cycle pulses as shown on curve 806. These are defined as

$$\Delta t_j = t_{j-1} - t_j,$$

and

$$\Delta t_1 = 1/2(t_{-1} - t_1)$$

for which

$$\Delta_j = \sum_{i=1}^{j} \Delta t_i$$

satisfying the requirement of equation 18. By knowing a sequence of $\Delta t_j$'s simultaneous equations formed from equation (18) can be used to solve for $\ddot{\psi}_o$ and $\alpha$. By knowing the polarity of $\dot{\psi}$ and the polarity of signals "a" and "b" derived from the logical signals A and B, and using the trigonometric cosine and sine relationships, the value for cosine $\psi$ and sine $\psi$ can be determined for each ZRC phase angle.

Equation (19) below is a modification of equation 18 which includes the orthogonality constant, $\phi$. Three simultaneous equations can be produced from known time values between the A and B zero crossing points to solve for $\alpha$, $\ddot{\psi}_o$ and $\phi$. From the logical signals A and B derived from signals "a" and "b" the polarity of $\dot{\psi}$ can be determined and the ZRC quadrant can be identified. This information can be used to calculate $\psi_o$ in terms of $\alpha$.

The polarity of $\dot{\psi}$ can be defined by the logical expression

$$D = A \oplus Bp \begin{cases} 0 & \text{postiive } \psi \\ 1 & \text{negative } \psi \end{cases}$$

where Bp is the logical state of B before the most recent change of state of either A or B.

(19)
$$\alpha \pm \lambda_j \phi + (j-1)\frac{\pi}{2} = \frac{|\ddot{\psi}|}{2}\Delta_j^2 \quad \text{for } j = 1, 2, 3,...$$

The value of $\lambda_j$ in equation (19) times $\phi$ is zero whenever:

$A \oplus B \oplus D = 0$ and j is odd, or

$A \oplus B \oplus D = 1$ and j is even.

Otherwise $\lambda_j$ is "1" having the sign value being positive when $\dot{\psi}$ is positive, and negative when $\dot{\psi}$ is negative.

The above discussion shows just one technique for obtaining the value of $\ddot{\psi}$ and $\psi_o$, and ultimately producing values of the sine and cosine function of the angle $\psi$ at the zero rate crossing, namely, when $\dot{\psi}$ is zero. Many other approaches are, of course, possible using the measurements of $\Delta t$ between events occurring and indicated by the output of either of photodetectors 301 or 302. One example of another technique for obtaining the value of $\psi_o$ and $\ddot{\psi}_o$ is the use of half-cycle times. That is, making time measurements between successive positive going and negative going zero crossings of the output signal provided by one of the photodetectors which can, of course, be determined by looking at changes of state of either of the logical outputs A or B. An expression similar to equation (19) can be generated, a new set of simultaneous equations can be written. Similarly, $\psi_o$ and $\ddot{\psi}_o$ can be determined by making time measurements between whole cycle times.

Again referring to Figure 6, the output signals A, and B and Z are presented to signal processing means 610. Signal processing means 610 includes a timing control, 611, parameter storage means, 612, direction logic means, 613, timer clock 614, timer 615, memory array 616, index control 618, and ZRC calculator (computer) 617. Each of these elements are well known in the art, and can be found in any general purpose computer including the variety of computers known as microprocessors or microcomputers.

Parameter storage means, 612, stores the values of A and B, the prior values of A and B defined as Ap and Bp, before the last received quarter cycle pulse, Z, the logical representation of the polarity of $\dot{\psi}$ indicated by D, and the previous value of D, defined as Dp, before the last quarter cycle pulse. The values of D and Dp are provided by direction logic block 613 having the logical expression indicated above. The information stored in parameter storage means 612 is utilized for ZRC phase angle determination in connection with ZRC calculator 617.

Signal processing means 610 includes a timing control, 611, which is primarily controlled by the output of pulses from OR-gate 603, and quarter cycle timing. Timing control signal 611 essentially synchronizes the storage parameters A, B and D before and after the quarter cycle pulse. Timing control, 611 also synchronizes timer, 615, which timer or counts timer clock pulses provided by timer clock, 614. Timer clock pulses are indicated by pulses 806 in Figure 8. Timer 615 counts the number of clock pulses between quarter cycle pulses. Z, indicated by pulses 805 in Figure 8. The purpose of timer clock 614 and timer 615 is to determine the real time between quarter cycle pulses. The output of timer 615 is a digital representation of the real time between quarter cycle pulses and is successively stored after each quarter cycle pulse in memory array 616. Memory array, 616, stores the real time values between quarter cycle pulses and stores them in a matrix or array location identified by the index term "Jc" provided by index control 618 as is indicated in Figures 6 and 8. The memory array is under control of timing control 611 so that the index Jc is incremented for each quarter cycle pulse.

As indicated earlier, having the times between quarter cycle pulses, and detecting the occurrence of direction change, D, the value of the ZRC phase angle and the value of $\psi$ can be determined as already indicated.

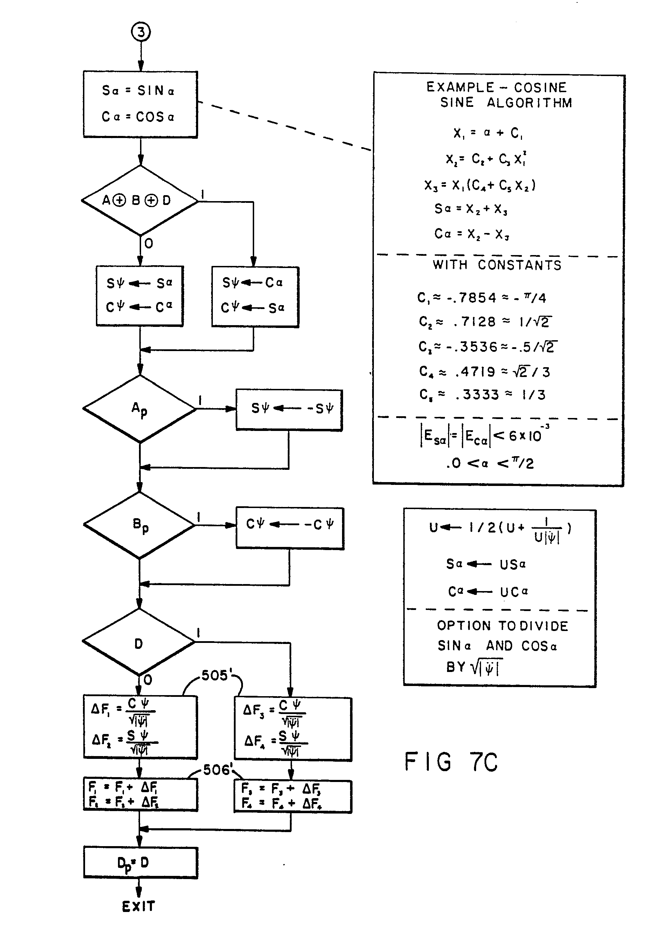

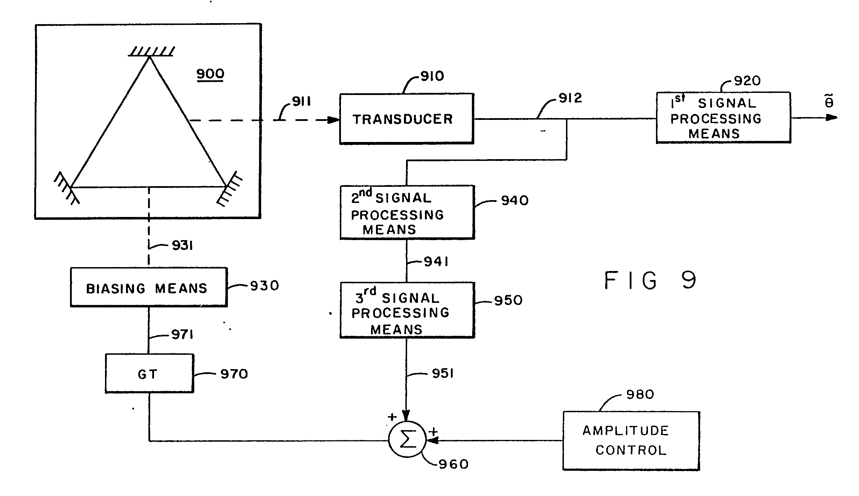

Curve 806 represents the output of timer clock 614 for timer 615 having a value of 10 megahertz. It is assumed in the discussion which follows relative to the flow diagrams shown in Figure 7 that the dither frequency is relatively slow compared with the ZRC calculator cycle times for computation. Of course, many variations of the value of timer clock 614 may be utilized with more or less greater accuracy for the ZRC phase angle determination.

ZRC calculator 617, in Figure 6, is essentially a computer or microprocessor programmed for solving the simultaneous equations for determining a solution of equation (19) for $\alpha$, $\phi$, and $\dot{\psi}$. The flow diagram shown in Figure 7a begins by noting a quarter cycle detection signal provided by the output Z. The index, Jc is incremented by one and the time between the last quarter cycle pulse and the current one is stored in the appropriate indexed array, and the timer is reset. At this point in the flow diagram the direction parameters D and Dp are examined to determine if a direction change has occurred, namely the ZRC crossing. If not, the cycle repeats. If a direction change is indicated, the ZRC calculation process begins as noted in the flow diagram shown in Figure 7b.

At the beginning of the ZRC phase angle calculation indicated by the routine shown in the flow diagram of Figure 7b, the values of A, B, $A_p$, $B_p$, D and $D_p$ are stored as indicated by block 720. Note that when the ZRC routine is entered, the values of $A_p$, $B_p$, and $D_p$ are those values which correspond to the phase angle quadrant prior to the direction or polarity change of $\dot{\psi}$, and A, B, and D correspond to those values after the direction changed, that is after the zero rate crossing— $\dot{\psi}$ being zero.

The ZRC routine process continues in Figures 7a and 7b by calculating the individual values of $\Delta_j$ for J=1, 2 and 5, and are subsequently utilized for calculation of $\phi$, $\psi_o$, and $\dot{\psi}_o$. Note that other values could have been chosen except for J=1 for determining a different set of simultaneous equations. Using these values of $\Delta_j$, a set of simultaneous equations can be generated for the solution of equation (19) as shown below.

$$\dot{\psi}=\frac{4\pi}{\Delta_5^2-\Delta_1^2} \quad ,\alpha=\frac{|\dot{\psi}|}{2}\Delta_1^2$$

(20)

$$\phi=\frac{|\dot{\psi}|}{2}(\Delta_2^2-\Delta_1^2)-\frac{\pi}{2}$$

Using the stored parameters in block 720, the sign of $\phi$ is determined for modifying the value of the $\alpha$ angle calculated. Once $\alpha$ is determined at point 730 in the flow diagram, the sine of $\psi$ and cosine of $\psi$ is determined by the routine shown in the flow diagram of Figure 7c. The ZRC calculator 617 of Figure 6 includes the sine and cosine function generator for determining the sine of $\alpha$ and the cosine of $\alpha$. Because of the trigonometric relationships between the signals "a" and "b", the logical states of outputs A and B can be utilized for determining the sine of $\psi_o$ and the cosine of $\psi_o$ from well known trigonometric identities as indicated in the flow diagram shown in Figure 7c. These values, in turn, are divided by the square root of the absolute value of $\psi_o$ just determined in accordance with equations (13a—d), and further processed in accordance with equation 15 in flow diagram blocks 505' and 506' respectively in Figure 7c, corresponding to blocks 505 and 506 in Figure 5. The output data of ZRC calculator 617 being that already indicated at the output means 141 of second signal processing means 140.

Although not indicated, the general manipulation of the array index Jc as well as initializations of the storage and summing means 506 are not shown but procedures for such are well known in the art.

Since $\phi$ is an orthogonality constant between detectors 301 and 302, $\phi$ generated by the solution of the simultaneous equations should always be equal, however there is always some error in such a process. Indicated in the flow diagram of Figure 7b by block 740 is a digital filter for obtaining an average value of $\phi$ having the form:

$$\hat{\phi}=\hat{\phi}+K_\phi(\hat{\phi}-\phi)$$

where

$\phi$ is the currently calculated value;

$\hat{\phi}$ is the filtered value; and

$K_\phi$ is the filter gain.

Thus, one example for providing a determination of the ZRC phase angle at each ZRC crossing has been described and also a method for obtaining the sum of the sines and cosines of the ZRC phase angle each divided by the appropriate value of $\dot{\psi}$ for the individual ZRC instant for each direction has also been described.

As indicated by Figure 1, the third signal processing means 150 receives data from the output of the first signal processing means 120 which provides gyro output data uncorrected for lock-in through connecting means 121. Third signal processing means 150 also receives data from the second signal processing means 140 through connecting means 141, the data being lock-in error parameters F1, F2, F3 and F4. The data provided by second signal processing means 140 is a continuous record of the sum of the incremental error parameters being functions of the sines and cosines of the ZRC phase angle for each direction of rotation of the ring laser gyro, the sums being already defined as lock-in error parameters indicated by equations (15) and (13). The function of third signal processing means 150 is to combine the raw gyro output data from the first signal processing means 120 and the lock-in error parameters from second signal processing means 140 to provide the characteristic signature coefficients already described, and signals indicative thereof at the output means 151 of the third signal processing means 150. Third signal processing means can be any computational device capable of performing a linear regression in order to establish the coefficients C1, C2, C3, and C4 for a solution to equation (14). Once the coefficients are determined, the gyro output provided by first signal processing means 120 can be corrected by continuous knowledge of the lock-in error parameters F1, F2, F3, and F4 in accordance with equation (14) recorded again here in somewhat different form:

(21) $$\theta_c=\bar{\theta}-C_1F_1-C_2F_2-C_3F_3-C_4F_4$$

One type of linear regression solution to establish empirically the coefficients indicated by equations (12a) and (12b) is the well known least squares fit of a polynomial based on known parameters to generate a set of coefficients. As indicated by equations (11a) and (11b) there are four coefficients to be determined, namely, C1, C2, C3, and C4.

The inputs required by third signal processing means 150 to perform its functions as discussed are (i) uncorrected gyro output data, (ii) the lock-in error parameters, and (iii) some known values or known functions of angular rotation. The latter term provides the lefthand side of equation (21) in order to derive a polynomial indicative of a characteristic signature of the ring laser gyro. Knowledge of angular rotation required by third signal processing means 150 may consist of information gained from an external reference such as another gyro or an angular rate measuring test device. Alternatively, the knowledge may be simply that the angular rate is constant, such as knowing that ring laser gyro 100 is not rotating relative to the earth.

Having the three kinds of information required by third signal processing means 150 indicated above, the ring laser gyro may be monitored for several seconds or several hours providing discrete input information into the third signal processing means and generating the characteristic signature coefficients. Once the coefficients have been established, the characteristic signature of the ring laser gyro being so characterized, the system may be continuously operated utilizing the coefficients generated by the third signal processing means 150 and the continuously supplied lock-in error parameters generated by second signal processing means 140 as will be now explained.

Again, referring to Figure 1, there shown is a fourth signal processing means, 160 having as inputs: (i) uncorrected gyro output data provided by first signal processing means 120 through connecting means 122; (ii) lock-in error parameter signals F1, F2, F3, and F4, provided by second signal processing means 140 through connecting means 142; and (iii) the characteristic signature coefficients provided by third signal processing means 150 through connecting means 151. The fourth signal processing means provides the computation indicated by equation (21) and corresponding equation (14) and provides a corrected gyro output signal at the output thereof which is a function of the uncorrected gyro output provided by the first signal processing means 120, the lock-in error parameter signals provided by the second signal processing means 140, and the pre-established characteristic signature coefficients provided by the fourth signal processing means 150. Thus, the output of the fourth signal processing means, 160, is the corrected gyro output taking into account the errors introduced by lock-in or other light scattering errors which are part of laser gyro system 100 as shown in Figure 1.

The signal processing means, 120, 140, 150, and 160, although indicated in Figure 1 as separate signal processing means, may be combined into a single signal processing means such as a general purpose computer, or a microprocessor, or the like. Obviously, many modifications and variations of the present invention are possible in light of the above teachings. Although use of the ZRC phase angle is shown, a different choice is possible in accordance with equation (4), such as $\psi$ at $\dot{\psi}$ being a maximum. Further, there are many possible ways of using the outputs of either one or both of photodetectors 301 or 302 to obtain information representative of ZRC phase angle utilizing a digital timing scheme as indicated above or may also be provided by utilizing analog circuitry for monitoring the output signals of photodetectors 301 and 302. Thus, techniques for obtaining ZRC phase angle information is a matter of choice.

The flow diagrams presented in Figure 7 are presented as an example of a scheme which may be written in common programming language for either a general purpose computer or microprocessor as is well known in the art.

The ring laser gyro system presented above with reference to Figures 1 thru 8 makes use of the zero rate crossing phase angle $\psi$, occurring at each turnaround indicated by $\psi$ being zero, to generate one or more incremental error parameters and one or more lock-in error parameters which are used for a determination of the accumulated error in the gyro output angle. These error parameters, when multiplied by a set of coefficients which characterize the laser gyro from which the error parameters were obtained and combined with the uncorrected gyro output angle data derived from the counter-traveling beams provide a compensated or corrected gyro output angle substantially corrected for lock-in errors. Continuous unpdating of the error parameters in combination with the coefficients representing the characteristic signature of the laser gyro provide a means from which the gyro output signal can be corrected for the error between the true gyro input angle and the uncorrected gyro output obtained. A correlary of this is that if the error parameters are zero the characteristic coefficients have no importance, and furthermore, no correction of the gyro output signal would be required. This correlary is easily seen by analysis of equation (14) and equation (21).

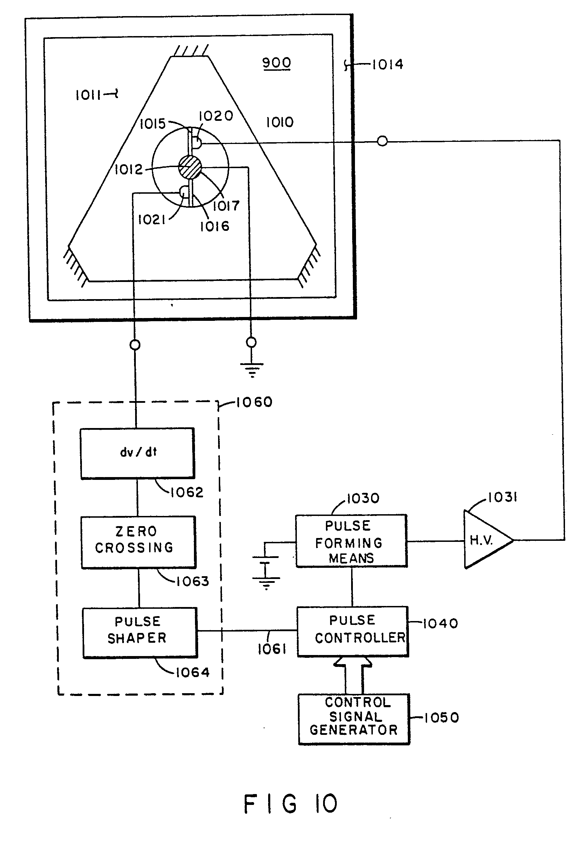

A ring laser gyro system operating in accordance with the above correlary is shown in block diagram form in Figure 9. The system shown in Figure 9 is somewhat similar to the system shown in Figure 1 with the addition of a feedback biasing system arrangement which, as will be explained below controls the bias applied to the ring laser for ultimate control of the error parameters in a manner so as to drive the error parameters toward zero.

Referring now to Figure 9, a transducer 910 is coupled to ring laser gyro 900 through coupling means 911 for providing electrical signals indicative of the behavior of at least one of the counter-traveling beams within ring laser gyro 900. A first signal processing means 920 is responsive to electrical signals provided by transducer 910 through connecting means 912. The first signal processing means 920, transducer, 910, and ring laser gyro, 900 perform the same functions and provide substantially the same signals as corresponding blocks 120, 110, and 100 respectively in Figure 1. Ring laser gyro 900, like ring laser gyro 100 in Figure 1, is coupled to a biasing means 930 similar to biasing means 130 except that biasing means 930 is responsive to an external control signal 971. Biasing means 930 is coupled to ring laser gyro 900 through coupling means 931. First signal processing means 920, similar to first signal processing means 120 in Figure 1, produces the gyro output angle signal which is derived from the electrical signals provided by transducer 910 and is uncorrected for any light scattering errors such as lock-in. As will be shown, the ring laser gyro system shown in Figure 9 provides a gyro output angle from first signal processing means 920 which contains a minimal amount of lock-in error therewith, substantially less than that contained in the output signal of first signal processing means 120 in Figure 1.

In Figure 9, a feedback biasing system arrangement is shown comprised of second and third signal processing means, 940 and 950 respectively, responsive to signals from the output of transducer 910 also through coupling means 912 to provide a bias control signal for biasing means 930. The bias control signal provided by third signal processing means 950 is summed by summing means 960 with a constant input signal provided by amplitude control 980. The output of summing means 960 is amplified by a gain block, 970, having a gain GT. The output of gain block 970 is designated by numeral 971 and presented to biasing means 930 for control of the bias introduced into the counter-traveling beams of ring laser gyro 900. This feedback system arrangement controls the bias applied to ring laser gyro 900 for effecting the counter-traveling waves in such a manner so as to drive the lock-in error normally included in the gyro output angle toward zero. Thus, the output angle provided by first signal processing means 920 need not be corrected for any error such as that included in the output of the first signal processing means 120 in Figure 1 due to the normal buildup of error in dithered gyros as is typical in prior art systems.

Second signal processing means 940 is similar to second signal processing means 140 and the corresponding description with reference to Figures 5, 6, 7, and 8. Similar to Figure 5, the second signal processing means 940 responds to electrical signals from transducer 910 provided on connecting means 912. Second signal processing means 940, like the second signal processing means 140 in Figure 1, and described with reference to Figure 5, generates lock-in error parameter signals derived from ZRC phase angle information. The output signals produced by second signal processing means 940 are: (i) a signal indicative of the polarity of $\psi$ corresponding to polarity of the frequency difference between the two counter-traveling beams; (ii) a signal indicative of a change in polarity of $\psi$, the signal being some sort of pulse or logic level change; (iii) a signal indicative of the ZRC phase angle occurring at the instant of polarity change of the frequency difference between the two counter-traveling means, i.e. $\psi$ equals zero; and (iv) lock-in error parameter signals being defined by equations (15) and (13) which are functions of the accumulation of the sine and cosine function values of the ZRC phase angle for each polarity of $\dot{\psi}$.

The output signals provided by second signal processing means 940 as indicated in (i) through (iv) just presented are presented in third signal processing means 950 through connecting means 941.

Third signal processing means 950 responds to the signals provided by second signal processing

15

means 940, and in particular to the lock-in error parameter signals F1, F2, F3, and F4 per equation 15 and corresponding equation (13). Third signal processing means 950 operates on the lock-in error parameter signals and provides a control signal for controlling biasing means 930. The output of third signal processing means is added to a constant value signal provided by amplitude control 980 and the resultant signal is amplified by a system gain factor GT and presented to biasing system 930. In a mechanical biasing system, amplitude control 980 provides a signal for obtaining a desirable peak-to-peak angle of rotation commanded by biasing means 930. Biasing system 930, as will be explained in more detail below, is provided with a constant bias determined by amplitude control 980 incrementally changed by a value determined by third signal processing means 950 for controlling the value of the ZRC phase angle. In a mechanical biasing system, biasing system 930 is controlled in such a way as to vary the back and forth rotation angle about the gyro input axis so that ZRC phase angle has determined values.

Biasing means 930 functions in a similar manner to biasing means 130 in Figure 1. Biasing means 930 provides a means for introducing a varying bias in the frequency of at least one of said beams of electromagnetic radiation counter-traveling in ring laser gyro 900 thereby introducing a varying frequency difference, alternating in sign, between said waves of electromagnetic radiation. Biasing means 930, however, differs from biasing means 130 in Figure 1 insofar as biasing means 930 is responsive to a bias control signal provided by third signal processing means 950 for affecting the bias in such a manner to affect the characteristic of the varying frequency difference between the counter-traveling waves to produce a determined value of the ZRC phase angle. In the case of a biasing means which provides mechanical rotation of ring laser gyro 900, the bias control signal provided by a third signal processing means 950 will affect biasing means 930 so as to effect the amplitude of the mechanical back and forth angle of rotation about the gyro input axis. This in effect will affect the integrated frequency difference between the counter-traveling waves, and thus affects the phase angle at the instant of $\psi$ being zero, and changes polarity, which of course, is indicative of a change in the polarity of the frequency difference between the counter-traveling beams, and is the ZRC phase angle as aforesaid.

The system presented in Figure 9 is equally applicable in a feedback biasing system arrangement where the biasing means 930 is part of an electrical or optical biasing system which directly affects the counter-traveling beams in ring laser gyro 900 without mechanical rotation about the input axis. Like the mechanical biasing arrangement, the third signal processing means 950 affects biasing means 930 so as to also introduce a varying bias in the frequency of at least one of the counter-traveling waves in ring laser, gyro 900 and thereby produce a varying frequency difference, and more importantly, affect the instantaneous phase angle between the two counter-traveling waves at the point when $\psi$ changes polarity.

It is helpful in understanding the present embodiment of the invention to have a more detailed understanding of one example of a biasing system arrangement of biasing means 930 and how it is coupled to ring laser gyro 900. Consider the biasing system arrangement substantially shown in Figure 10. Ring laser gyro 900 is shown in Figure 10 where the closed-loop path is indicated by reference numeral 1010 and is secured to a base means 1011 which supports the closed-loop path lying in a plane parallel to base means 1011 and supports the two counter-traveling beams which travel along the closed-loop path. Ring laser gyro 900 is intended to measure rotation about axis 1012 which is normal to the plane which forms the closed-loop path. Further, base means 1011 is coupled to a second base means 1014 through two or more leaf springs indicated by leaf springs 1015 and 1016, and a shaft 1017 affixed to second base means 1014. In this arrangement of ring laser gyro 900, the base 1011 is allowed to rotate about axis 1012 which is substantially concentric with shaft 1017 affixed to base means 1014 through leaf springs 1015 and 1016. Thus, base 1011 can rotate back and forth about axis 1012 relative to base 1014. A system of this configuration is substantially a high-Q spring-mass system. By applying a controlled torque to at least one of the leaf springs, rotation and the amplitude of rotation angle can be controlled.

One example of controlling the mechanical rotation is also shown in Figure 10. Bidirectional piezoelectric devices 1020 and 1021 are shown coupled to leaf springs 1015 and 1016 respectively. Piezoelectric device 1020 is a means for torquing leaf spring 1015, and piezoelectric device 1021 is a means for measuring the amount of torque applied by pieozelectric device 1020. Combined with appropriate circuitry the arrangement shown in Figure 10 becomes part of an electromechanical oscillator having a high-Q.

Consider how the electrical system for driving the piezoelectric device 1020 for producing back and forth motion of base means 1011 about axis 1012 relative to base means 1014. A pulse forming means 1030 applies electrical pulses to piezoelectric device 1020 through a high voltage amplifier 1031. These pulses are alternated in polarity and are synchronized with the output of piezoelectric device 1021 as will be more fully described. The characteristic of the pulses provided by pulse forming means 1030 can be pulse width modulated or amplitude modulated, or the like. The system shown in Figure 10 is an example of a system utilizing pulse width modulation for controlling the amount of rotation of base 1011 relative to base 1014. As shown, pulse controller 1040 is controlled by a control signal generator 1050 for controlling pulse forming means 1030 which provide pulses applied to the piezoelectric device 1020. Pulse controller 1040 is synchronized with the instances of rotational duration change of base 1011 relative to base 1014— instances of direction change ultimately causing $\psi$ to go through zero, and change polarity. This is so for the usual situation in which the rotation rate caused by the dither is greater than the inertial input rotation rate. Synchronization is accomplished by taking the output of piezoelectric device 1021 for processing by turnaround direction indicator 1060 which produces a SYNC pulse presented to pulse controller 1040 through connecting means 1061.

Turnaround indicator 1060, by way of example, is shown comprised of a voltage differentiator 1062, the output which is fed to a zero crossing indicator 1063, the output of which is applied to a pulse shaping circuit 1064. The output of the pulse shaper 1064 is presented to the pulse controller 1040 through connecting means 1061.

Turnaround indicator 1060 essentially provides SYNC pulses presented to pulse controller 1030 so that pulse controller 1040 can provide gating signals to pulse forming means 1030 through connecting means 1041 relative to time in the SYNC pulse. It should be noted that SYNC pulses could be obtained from $\dot{\psi}$ logic signals at the output of second signal processing means 940. However, this is a matter of choice.

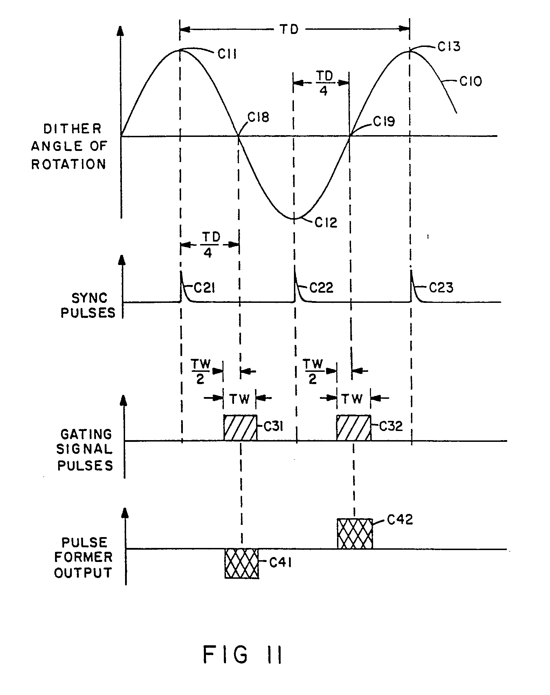

The operation of the biasing means just described will now be presented with reference to Figures 10 and 11. The combination of the biasing system comprised of base 1011, leaf springs 1015 and 1016 forms a spring-mass system having a resonant frequency hereafter referred to as the dither frequency, FD. Associated with the dither frequency is the dither period, TD. For purposes of the following discussion, assume that control signal generator 1050 generates a signal corresponding to a desired pulse width to be provided by pulse forming means 1030 of finite time width, TW whereby the pulse controller, 1040, applies agating signal to pulse forming means 1030 at a start time corresponding to:

$$t(START)=TD/4-TW/2$$

and the gating signal is withdrawn at a time corresponding to:

$$t(STOP)=TD/4+TW/2$$

A graphical representation of the synchronized gating of pulse forming means 1030 just described is. shown in Figure 11. In Figure 11, curve C10 represents the angle of rotation about the gyro input axis 1012 in Figure 10. Instances of turnaround, that is, change in direction of rotation of the base 1011 about the axis 1012 are indicated on curve C10 at points C11, C12, and C13 changes in direction are detected by zero crossing detector 1064 responsive to the output of differentiator 1062. At turnaround, the output of differentiator 1062 is zero resulting in a SYNC pulse at the output of pulse shaper 1064. Each time a change of direction occurs, a SYNC pulse is provided by the turnaround indicator, 1060, and is indicated in Figure 11 by SYNC pulses C21, C22, and C23. Pulse controller 1040 combines the SYNC pulses with the output of the control signal generator 1050 generating the value of TW, and provides a gating signal to pulse forming means 1030. The gating signals are indicated by pulses C31 and C32. The width of gating signals C31 and C32 is equal to the value of time, TW, generated by control signal generator 1050. The start and stop times of the gating signals are measured from the SYNC pulse, for example, C21 and C22.

The start and stop time of the gating signal relative to the SYNC pulse assumes a known dither frequency, FD and corresponding period, TD. The value of FD may or may not be the actual resonant dither frequency of the specific laser angular gyro spring-mass sytem of which the biasing system is applied, but should be reasonably close. If the value of the derived pulse width TW is small relative to the resonant dither period, TD, small variations in the value of TD chosen relative to the actual resonant dither period will have a minimal effect with respect to the dither frequency of the spring-mass system. In other words, the spring-mass system will dither at its actual resonant frequency, FD.

The actual dither angle amplitude for each direction of movement of the biasing system shown in Figure 10 is primarily related to the value of the pulse width TW provided by control signal generator 1050 prior to the next turnaround. In the above example, it was assumed that control signal generator, 1050, was constant. In this situation, after the system is turned on, the dither angle amplitude will grow until the gain is equal to the losses of the spring-mass system resulting in a substantially constant mass-to-peak dither angle amplitude, the angle of rotation sinusoidally varying. A change in time TW provided by control signal generator 1050, will affect the dither angle amplitude, each pulse contributing to one or the other direction of peak amplitudes. The relationship between the change in amplitude of rotation for a change in pulse width, TW, is dependent upon the relative placement of the gating signal pulses relative to the zero angle of rotation indicated by points C18 and C19 on curve C10 in Figure 11. If the center of the enabling pulses, and more particularly the centering of the applied pulses to piezoelectric device 1020 are centered exactly at instances indicated by points C18 and C19, a maximum linear relationship should exist between a change in rotation angle for a change in value of pulse width, TW. The actual starting of the gating signal pulses is dependent upon the chosen constant, TD, which is assumed to be the period of the resonant dither frequency, FD. This may or may not be the case because of the many variables which will contribute to the resonant dither frequency of the specific spring-mass system in question. However, if the pulse width, TW, provided by control signal generator 1050 is small relative to the dither period, TD, and the chosen value of TD having vary close to the actual value of TD, there will exist a vary linear relationship between the amplitude of the angle of rotation and the value of the pulse width, TW, provided by the control signal generator, 1050. On the other hand, deviation from the actual responant dither period, TD, from the chosen constant value, TD, will tend to degenerate the linear relationship desired.

In summary, the biasing system presented in Figure 10 provides a means for controlling the peak dither angle amplitude for each direction of rotation as a function of a single input signal, TW, provided by control signal generator 1050. A change in the diether angle amplitude will constitute a change in the ZRC phase angle—the instantaneous phase angle at turnaround, namely points C11, C12, and C13 indicated in Figure 11. Further, if the lock-in error parameters (F's) indicated by equation (21) can be reduced to zero by control of the ZRC phase angle, the gyro output angle from the first signal processing means 920 in Figure 9 can be devoid of any lock-in error or substantially reduced. The control signal generator, 1050 in Figure 10 is essentially the combination of third signal processing means 950 and amplitude control 980, the outputs thereof being summed by summing means 960. The output of summing means is substantially the output provided by control signal generator 1050 in Figure 10. The output of summing means 960 is primarily varied by third signal processing means 950 which responds in the lock-in error parameter signals, functions of the ZRC phase angle. A detailed description of the third signal processing means, 950, and the control scheme therewith will now be presented.

Equation (10) and corresponding equation (11) in the above text, describes the incremental angular error from a single passage through zero rotation rate during one-half of a dither cycle—zero rotation rate corresponding to $\dot\psi$ being equal to zero. Combining and rewriting equations (11a) and (11b), and equation (15), the accumulated lock-in error is obtained by summing the individual error occurring at each of the positive and negative ZRC's:

$$(22) \qquad \varepsilon = \sum_{i=1}^{m} \delta\theta_i^+ + \sum_{i=1}^{m} \delta\theta_i^-$$

From equations (14) and (15) above, equation (22) can be rewritten:

$$(23) \qquad \varepsilon = \sum_{i=1}^{n} C_i F_i$$

where, for this example, $m=4$.

In the above text, a means for generating the lock-in error parameters, Fi's, and characteristic signature coefficients, $C_i$'s was discussed for determining the total lock-in error, $\varepsilon$, for direct subtraction from the output. In the discussion which follows, a means for controlling the lock-in error parameters to remain near zero will be introduced.

In equation (23) the accumulated lock-in error can be determined by observation of the lock-in error parameters as already discussed. If the lock-in error parameters as indicated in equation 23 are reduced to zero, the total accumulated lock-in error, $\varepsilon$ in the gyro output angle of the first signal processing means 920 in Figure 9 will be reduced to zero regardless of the value or knowledge of the characteristic signature coefficients, (C's).

Control is accomplished by forcing subsequent values of the sine and cosine values of the ZRC phase angle to be such that F1, F2, F3 and F4 converge to zero and thus the lock-in error, $\varepsilon$, converges to zero. This control scheme may be mathematically represented by a vector relationship represented by present values of the lock-in error parameters based on path values of ZRC phase angles, and determination of a future occurring ZRC phase angle affecting the future occurring incremental error parameters, $\Delta F$'s as will be described.

Considering $F_1$ and $F_2$ as two orthogonal elements of a vector $\vec{F}^+$, and $\Delta F_1$ and $\Delta F_2$ as two orthogonal elements of a vector $\Delta\vec{F}^+$, the greatest reduction in $\vec{F}^+$, and thus $F_1$ and $F_2$, is achieved by making $\Delta\vec{F}^+$ lie negative along the direction of $\vec{F}^+$, and is mathematically expressed by:

$$(24) \qquad \Delta\vec{F}^+ = -\frac{1}{\sqrt{|\dot\psi_o|}} \cdot \frac{\vec{F}^+}{|\vec{F}^+|}$$

where

$$\Delta\vec{F}^+ = \Delta F_1 \vec{i} + \Delta F_2 \vec{j}$$

$$\vec{F}^+ = F_1 \vec{i} + F_2 \vec{j}$$

Substituting equations (13a) and (13b) into equation (23) and equating corresponding vector components produces.

$$(25) \qquad \frac{\cos\psi_o^+}{\sqrt{|\dot\psi_o|}} = -\frac{1}{\sqrt{|\dot\psi_o|}} \cdot \frac{F_1}{\sqrt{F_1{}^2 + F_2{}^2}}$$

$$(26) \qquad \frac{\sin\psi_o^+}{\sqrt{|\ddot{\psi}_o|}} = -\frac{1}{\sqrt{|\ddot{\psi}_o|}} \frac{F_2}{\sqrt{F_1{}^2+F_2{}^2}}$$

From equations (25) and (26), the desired ZRC phase angle for positive $\psi_o$ is calculated:

$$(27) \qquad \psi_o^+ = \tan^{-1}\left[\frac{-F_2}{-F_1}\right]$$

where the solution of the arc tangent is required in all quadrants.

In a similar manner, $F_3$ and $F_4$ can be considered as two orthogonal elements of a vector $\vec{F^-}$, and $\Delta F_3$ and $\Delta F_4$ as two orthogonal elements of a vector $\vec{\Delta F^-}$. Following the same development described above, the desired ZRC phase angles for negative $\ddot{\psi}_o$ is calculated to be

$$(28) \qquad \psi_o^- = \tan^{-1}\left[\frac{-F_4}{-F_3}\right]$$

where the solution to the arc tangent is required in all quadrants.

The value of $\psi_o^-$ expressed in equation (27) is a determination of the desired ZRC phase angle at a future occurring or the next turnaround where $\ddot{\psi}_o$ is positive corresponding to an angular acceleration of rotation which is positive, and equation (28) represents an expression for the value of the ZRC phase angle where $\ddot{\psi}_o$ is negative corresponding to an angular acceleration of rotation which is negative. If the next occurring ZRC phase angles are within plus or minus $\pi/2$ radians of the values determined in equations (27) and (28), the lock-in error parameters will decrease resulting in a reduction in the accumulated lock-in error, as expressed in equation (23) and subsequent reduction of lock-in error contained in the gyro-output angle provided by first signal processing means 920.

Referring again to Figure 9, third signal processing means 950 processes the lock-in error parameter signals, as indicated by the expressions for the F's in equation (23), and applies the control scheme in accordance with equation (24) such as that just presented, for providing an output signal for controlling biasing means 930 resulting in the next ZRC phase angles to be those values as presented in equations (27) and (28). The success of the feedback biasing arrangement and control scheme just presented depends on the ability of the feedback biasing system arrangement to provide reasonably accurate control of the ZRC phase angle.

The ZRC phase angle is, of course, dependent not only upon the motion applied by biasing means 930 in Figure 9, but also depends upon the base motion or input motion which the ring laser gyro is intended to measure. The third signal processing means 950 in Figure 9 must provide a means for predicting the total response of the feedback biasing system arrangement so that third signal processing means 950 may provide appropriate signals to obtain the desired ZRC phase angles in the presence of input motion so that the error contained in the gyro output angle from first signal processing means 920 is minimized. The exposition which follows presents a method for producing a control signal from third signal processing means 950 which will provide control of the ZRC phase angle with the requirements set forth in the discussion of equations (27) and (28).

The control action implied by equations (24) through (28) requires that future ZRC phase angle values be affected to reduce the resulting values of the lock-in error parameters (F's). This, of course, assumes that a binary of ZRC phase angle measurements has already been obtained and stored for future processing. Assuming a dithering system as that substantially shown in Figure 10 which periodically applies torques to the leaf springs as described, the ZRC phase angle measurements are a function of these applied torques and external disturbances about the gyro input axis which include the inertial rotation input rate or base motion also about the gyro input axis. The external disturbances must be accounted so that the effect of a change in applied torque can be isolated. To reduce the effect of the external disturbances, namely the true rotation rate input, it is desirable to predict and control the next ZRC phase angle based on the most current data. It is important to distinguish in the following discussion between the ZRC phase angle between positive and negative values of $\ddot{\psi}$ so that proper control is provided.

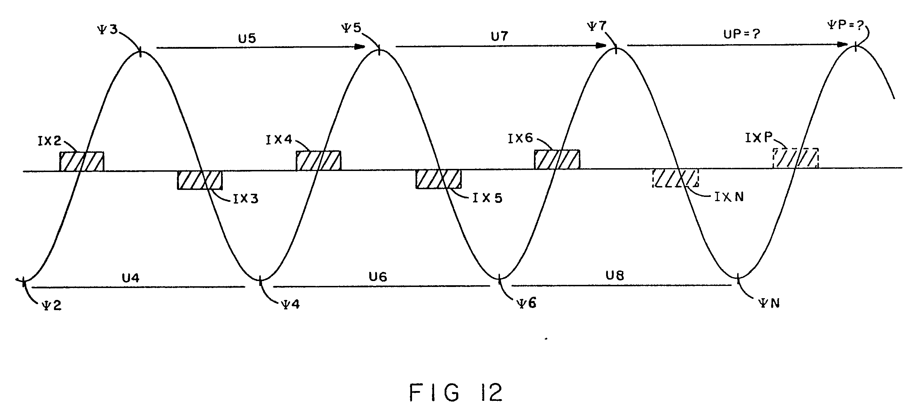

Figure 12 graphically presents several dither cycles, and superimposed thereon are the applied control torques. The control torques are shown in Figure 12, indicated by "IXn" centered around the midpoint between the ZRC phase angles, i.e. maximum dither angle amplitudes, although this is not necessary for system operation as discussed above relative to Figure 10. Thw applied control torques are indicated in Figure 12 by "IXn". In the following discussion, "IXn" represent an incremental control torque expressed in units of radians which is added to a constant value. Since the applied control torque is a quantity of energy, the effect of the incremental control torque is an incremental effect on the angular value of $\psi_o$ and in the specific example, the dither angle amplitude.

Referring to Figure 12, assume that laser gyro 900 has been dithered for some time and that the last ZRC measurement which was made is $\psi 7$, some time before the application of the applied control torque.

IXN. Further assume that the incremental control torque IXN has been calculated and corresponds to the control torque which will be applied before the occurrence of $\psi$N. It is the object of the third signal processing means, 950 in Fiugre 9 to provide a control signal representative of the incremental control torque IXP to be applied prior to the ZRC phase angle indicated by $\psi$P for control thereof. In this situation, $\psi$P is the desired value of the ZRC phase angle which will cause the vector $\overrightarrow{F^-}$, comprised of F3 and F4 as indicated in equation (24), to be reduced and thus reduce the amount of error contained in the gyro output.

One approach for predicting the amount of torque to be provided by IXP to produce the next ZRC phase angle, $\psi$P, is to predict the response of the feedback biasing system in the presence of an inertial input rotation rate by examining the history of the ZRC phase angles. This can be accomplished by comparing the values of successive ZRC phase angles of a chosen polarity of $\dot{\psi}$, or it is also possible to predict $\psi$P based on successive ZRC phase angles of alternating polarity of $\dot{\psi}_o$. There are many different control approaches in addition to the above two just exemplified for predicting the value of IXP to produce the "next" ZRC phase angle, $\psi$P. The following description considers only the former appraoch, that is, looking at successive ZRC phase angles of the same polarity of $\dot{\psi}_o$.

Assume that the change in inertial input rotation rate is relatively slow and the dither frequency is relatively fast. It follows then, that the change in ZRC phase angle "U" excluding input control torques, is approximately the same from one ZRC phase angle to the next ZRC phase angle of the same $\dot{\psi}$ polarity. For example, in Figure 12, UP is assumed to be substantially equal to U7. Defining U as a first order predictor, a general expression for U may be written as:

$$(29) \qquad U_i = \psi_i - \psi_{i-2} + (-1)^i (IX_{i-1} + IX_{i-2})$$

In the particular example, U7 and U5 are calcualted to be:

$$(30) \qquad U7 = \psi7 - \psi5 - (IX6 + IX5)$$

$$U5 = \psi5 - \psi3 - (IX4 + IX3)$$

A further refinement in predicting the value of UP is to look at the previous first order predictor, U5, and correct the value of UP by the change in the value between U7 and U5. This may be generally represented by the methematical expression:

$$(31) \qquad E1 = U_i - U_{i-2}$$

Using this error, E1, UP can be predicted in the general form:

$$(32) \qquad U_{i+2} = U_i + E1$$

In the specific example illustrated in Figure 12, and substituting in equation (31) and (32), UP is calculated to be:

$$(33) \qquad UP = U7 + (U7 - U5)$$

Since $\psi$P will depend upon the value of IXP and IXN, an expression for the value of $\psi$P in a general form can be mathematically expressed by:

$$(34) \qquad \hat{\psi}_{i+2} = \psi_i - (-1)^i (IX_i + IX_{i+1}) + U_{i+2}$$

The left-hand side of equation (34) is a predicted value of $\hat{\psi}$ (i+2) based on applied torques and is indicated by the "hat" above the term. Substituting the appropriate solution of equations (27) and (28), which satisfies the intended control function, for the left-hand side of equation (34) and solving for the value of IX (i+1) yields:

$$(35) \qquad IX_{i+1} = (-1)^{-i} (\psi_i - \hat{\psi}_{i+2} + U_{i+2}) - IX_i$$

In the particular example illustrated in Figure 12, $\psi$P is determined from equation (27) and substituted in equation (34) yielding:

$$(36) \qquad \hat{\psi}_P = \psi7 + (IXP + IXN) + UP$$

$$(37) \qquad IXP = (-1)(\psi7 = \hat{\psi}P + UP) - IXN$$

In the above analysis, IXN was assumed to be known and was calculated based on the ZRC measurement $\psi6$. Thus, in a similar manner the application of the general equations (34) and (35) and control equation (28) can be utilized for calculating subsequent values of $\psi N$; $\psi N$ being the ZRC phase angles having the opposite polarity $\dot{\psi}$ as those ZRC phase angles related in $\psi P$.

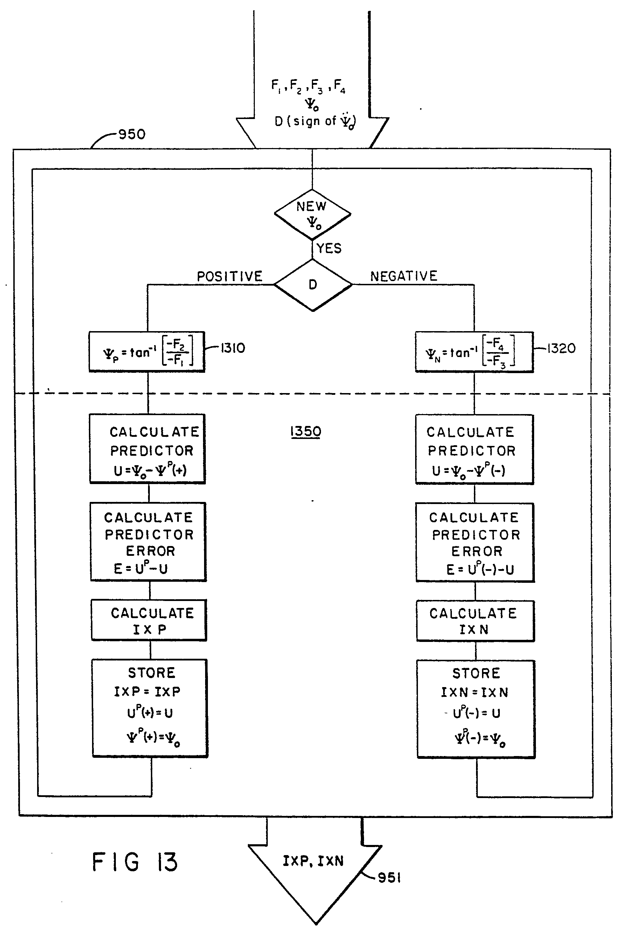

Third signal processing means 950 receives signals from second signal processing means 940 representative of the incremental lock-in error parameters, (F's), the most recent ZRC phase angle, $\psi_o$ and D, the polarity of $\psi_o$. In turn, third signal processing means 950 calculates a future or next desired value of the ZRC phase angle, $\psi P$ or $\psi N$, determined substantially by equation (27) and equation (28) respectively. The operations so far described are illustrated in the flow diagram shown in Figure 13 representing the operation of third signal processing means 950. A selected one of block 1310 and 1320, dependent upon the polarity of $\psi(D)$, operates on current data representative of the lock-in error parameters and calculates the desired value of $\psi P$ or $\psi N$ respectively. Subsequent to calculating $\psi P$, or $\psi N$, the value of the incremental control torque IXP or IXN is calculated based on past performance data using the "predictor" control scheme described above associated with equations (29) through (37). Third signal processing means requires sufficient memory storage for storing past values of the zero rate crossing phase angles as well as past calculated command values of the incremental control torques IXP and IXN. The process of calculating the incremental control torques is indicated by the section of the flow diagram shown in Figure 13 below the dashed line and indicated by reference numeral 1350.

The output of third signal processing means 950 indicated by numeral 951 in Figure 9 and also indicated by 951 in Figure 13 is a signal representative of an incremental control torque which is to be applied to the laser gyro 900 to obtain the zero rate crossing phase angle to satisfy the intended control function substantially described by equation (24). Third signal processing means 950, therefore, can be provided by any computer, computation device, microprocessor, and the like, for performing appropriate parameter storage, timing synchronization, and mathematical calculations associated with equation (29) through (37) and providing a control signal representative of the incremental control torques.

The output of third signal processing means 950 is summed with the output of amplitude control 980 by a summing means 960. The output signal of amplitude control 980 represents a desired constant value representative of a substantially constant desired peak phase angle or amplitude, whereas the output of the third signal processing means 950 is an incremental value of phase angle amplitude which is added to the constant value output of amplitude control 980. The output of summing means 960 is therefore a signal representative of the desired total phase angle change, $\Delta\psi$ or in other words the dither angle amplitude of laser gyro 900 provided by biasing means 930. The output of summing means 960 is multiplied by a scale factor or gain, GT by block 970. Block 970 also includes signal conversion processing compatible with biasing means 930.

In the exemplary biasing system described with reference to Figure 10, the output of gain block 970 indicated by numeral 971 and the preceding circuitry thereto represents the control signal generator 1050 in Figure 10 for controlling the dither system and particularly the applied torques to gyro 900. With a biasing system such as that shown in Figure 10, gain block 970 includes signal conversion processing for providing a signal representative of the desired pulse width, TW, of torque pulses which would be applied to gyro 900 as described above.

Of course, if the biasing system chosen was an amplitude modulated system, the signal conversion process provided by gain block 970 would provide an output signal representative of the desired pulse amplitude of torque pulses which would be applied to laser gyro 900. Thus, gain block 970 is designed to be compatible with the chosen biasing means 930 which, as stated above, can be a mechanical (rotating) biasing system or an electrical/optical biasing system.

The above analysis placed no restrictions upon the values of the control torques IXP and IXN and were assumed small. These in turn were added to a desired peak-to-peak constant amplitude provided by amplitude control 980 summed by summing means 960, the output of which controls the amplitude of rotation angle about the gyro input axis. Further, associated with the feedback biasing system arrangement are at least two system gains. The first gain, is the conversion from the values calculated, IXP and IXN, to a control signal utilized by the biasing system represented by that shown in Figure 10 which converts the system parameters IXP and IXN to an actual amplitude modulation or pulse width modulation of the pulse forming means 1030 in Figure 10. This gain has been indicated by block 970 in Figure 9. Furthermore, associated with the biasing system described in Figure 10 is an output gain which is essentially the sensitivity of the ZRC phase angle or amplitude of the dithering system to the pulse width or pulse amplitude.

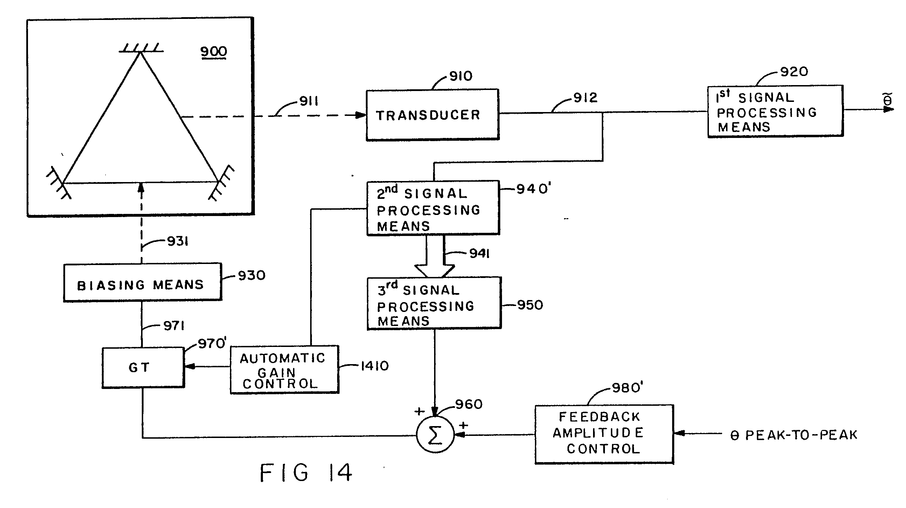

A combination of an amplitude control and/or an automatic gain control to laser gyro system of Figure 9 is desirable in some circumstances for improved system performance. The system shown in Figure 14 is another embodiment employing the principles of the invention which is essentially similar to that of Figure 9 with the addition of an automatic gain control and a feedback amplitude control. In Figure 14, similar functioning system blocks as those in Figure 9 have identical numeral designations. The amplitude control, 980, in Figure 9 has been replaced by feedback amplitude control 980' in Figure 14. The system gain block, 970, in Figure 9 has been replaced by gain block 970', and second signal processing means 940 in Figure 9 has been replaced by second signal processing means 940'. Added to the system of Figure 9 is an automatic gain control block, 1410.

The peak-to-peak dither angle is dependent upon the amplitude control torques from biasing means 930 for dithering laser gyro 900. The control torques must be sufficient to overcome the losses within the spring-mass system of the biasing system described with reference to Figure 10. It is desirable that the torquing current should be kept as low as possible and remain within a linear region so as to reduce the power requirement of the biasing system. Thus, it is desirable to maintain a substantially constant peak-to-peak dither angle amplitude which in turn confines the amount of energy needed by the biasing system. The feedback amplitude control, 980', in Figure 14 provides a variable signal in response to an input signal indicative of the peak-to-peak dither angle amplitude to summing means 960 which in turn is amplified by gain block, 970', for controlling biasing means 930. The peak-to-peak signal required by amplitude control 980' may be provided by signals derived from transducer 910 for determining the peak-to-peak dither angle or may be obtained from signals derived from mechanical rotation forced upon laser gyro 900. Since the first signal processing means 920 usually contains up and down counters for counting the number of $2\pi$ radian phase changes in the phase angle between the counter-traveling beams, signals representative of the peak-to-peak dither angle are available therefrom. Feedback amplitude control 980' may be implemented using a selected one of variety control schemes and can be implemented by a microprocessor and the like.

In Figure 9, the gain block, 970, is so chosen that values produced by third signal processing means 950 and values provided by the amplitude control 980 are multiplied by the system gain which convert signals therefrom into changes in the ZRC phase angle based on the predicting equations as discussed relative to equations (29) through (37). The accuracy of the system and in particular how fast can the lock-in error parameters be driven toward zero depends upon the accuracy of the gain value chosen for gain block 970. In order to improve accuracy, the system of Figure 14 includes gain block 970' responsive in automatic gain control, 1410, responsive to the prediction of the next ZRC phase angle and the actual ZRC phase angle obtained for modifying the value of gain block 970'. In operation, the automatic gain control continually modifies the gain of gain block 970' so that the control signals provided by third signal processing means 950 are multiplied by the appropriate gain value so that the difference between the ZRC phase angle obtained and that which is desired is minimal.

The processes described above are for a four parameter model including four lock-in error parameters (F's) and four coefficients (C's). From equations (12a) and (12b) it is clear that there is a corresponding two parameter model. The model is described below in terms of coefficients $C_{1*}$ and $C_{2*}$ and lock-in parameters $F_{1*}$ and $F_{2*}$, where

$$(38) \qquad C_1^* = \sqrt{\pi}\Omega_L(\sin\beta - \cos\beta)$$

$$(39) \qquad C_2^* = -\sqrt{\pi}\Omega_L(\sin\beta + \cos\beta)$$

$$(40) \qquad \Delta F_1^* = \frac{1}{\sqrt{|\tilde{\psi}_o|}}\sin\psi_o^+ - \frac{1}{\sqrt{|\tilde{\psi}_o|}}\cos\psi_o^-$$

$$(41) \qquad \Delta f_2^* = \frac{1}{\sqrt{|\tilde{\psi}_o|}}\cos\psi_o^+ + \frac{1}{\sqrt{|\tilde{\psi}_o|}}\sin\psi_o^-$$

and summing over the ZRC's.

$$(42) \qquad F_1^* = \Sigma\Delta F_{1j}^*$$

$$(43) \qquad F_2^* = \Sigma\Delta F_{2j}^*$$

The corresponding discussions that hold for the C's and F's also holds for the C*'s and F*'s. Thus equation (14) becomes:

$$\theta_c = \tilde{\theta} - \Sigma C_i^* F_i^*$$
$$(44)$$
$$\text{for } i = 1,2$$

As in equation (24) with respect to the feedback biasing system arrangements of Figures (9) through (14), the control of $\psi_o^-$ and $\psi_o^+$ needed to reduce the magnitude of $F_{1*}$ and $F_{2*}$ requires the vector $\vec{F}^*$ in lie negative along the vector F* where

$$(46) \qquad \vec{\Delta F^*} = -\frac{1}{\sqrt{|\tilde{\psi}_o|}}\frac{\vec{F^*}}{|F^*|}$$

where

(47)
$$\overrightarrow{\Delta F^*}=\Delta F_1^* \vec{i} + \Delta F_2^* \vec{j}$$

(48)
$$\overrightarrow{F^*}=F_1^* \vec{i} + F_2^* \vec{j}$$

For the positive ZRC's, substituting equations (40), (41), (47), and (48) into (46) and equating components of the vector produces

(49)
$$\frac{1}{\sqrt{|\ddot{\psi}_o|}} \sin\psi_o^+ = - \frac{1}{\sqrt{|\ddot{\psi}_o|}} \frac{F_1^*}{|\overrightarrow{F^*}|}$$

(50)
$$\frac{1}{\sqrt{|\ddot{\psi}_o|}} \cos\psi_o^+ = - \frac{1}{\sqrt{|\ddot{\psi}_o|}} \frac{F_2^*}{|\overrightarrow{F^*}|}$$

The condition is imposed that when a positive ZRC occurs, only terms involving $\psi_o^+$ are included. From equations (49) and (50)

(51)
$$\psi_o^+ = \tan^{-1}[\frac{-F_1^*}{-F_2^*}]$$

In a similar manner the desired $\psi_o^+$ can be obtained, resulting in

(52)
$$\psi_o^- = \tan^{-1}[\frac{-F_2^*}{F_1^*}]$$

The signal processing means 920, 940, and 950, and amplitude control 980, although indicated in Figure 9 as separate signal processing means, may be combined entirely or selected portions thereof into a single processing means such as a general purpose computer, or a microprocessor, and the like. Further, selected portions of biasing means 930 shown in Figure 10 and gain block 970 may also be combined into a single processing means along with those as aforesaid. Similarly, signal processing means 920, 940', 950, feedback amplitude control block 980', automatic gain control block 1410, gain block 970', and biasing means 930 may be combined entirely or selected portions thereof into a single processing means such as a general purpose computer and the like. Obviously, many modifications and variations of the present invention are possible in light of the above teachings. It is, therefore, to be understood that within the scope of the dependent claims the invention may be practiced otherwise as specifically described. Particularly, the apparatuses of Figures 1, 9, and 14 operate on the ZRC phase angle as a choice for obtaining incremental error parameters. However, a different choice of phase angle sampling, such as the phase angle when $\psi$ is a maximum, could also have been used. This, of course, would dictate a different but somewhat similar derivation, analysis, and control to that described above. From a practice standpoint, however, the ZRC phase angle is easily obtained since $\psi$ is indeed zero and transducer output signals are changing at the slowest rate.

**Claims**

1. An angular rate sensor (10) of the class wherein two electromagnetic waves travel in opposite directions, each wave substantially travelling about a closed-loop path, wherein the frequency of each of said waves is a function of the rate of rotation of said closed-loop path and there being a phase relationship established between said waves also being a function of the rate of rotation of said closed-loop path, wherein said sensor generates a first sensor signal related to the true angular rotation of said sensor but which includes lock-in error inherent in said sensor, and wherein said angular rate sensor includes a biasing means (130) capable of introducing a varying frequency bias in at least one of said waves resulting in a rate of change of said phase relationship between said waves to pass through zero at least once, comprising:

sensing means (110) responsive to at least one of said waves for providing at least one output signal which is indicative of said phase relationship, and including phase angle determining means, responsive to said sensing means at least one output signal, for determining a phase angle value, $\psi$, corresponding to said phase relationship between said waves, characterized by

said phase angle determining means (110) determining said phase angle value $\psi$ at those times having selected values of the first time derivative $d\psi/dt$ of said phase relationship; and sensor characterizing means (140, 150) responsive to selected ones of said phase angle values for obtaining sensor characteristic signature coefficients of a lock-in error function descriptive of said sensor wherefrom said lock-in error associated with said first sensor signal can be determined.

2. Sensor according to claim 1, characterized by:

biasing means (930) having an input terminal adapted to receive a bias control signal, said biasing means capable of varying at least one of said waves such that the phase ψ, of said phase relationship takes on selected values in response to said bias control signal at selected occurrences of those times when selected first derivative values of said phase relationship, dψ/dt, occur;

bias control signal generating means (940, 950) responsive to said sensing means (910) for generating said bias control signal so that said lock-in error in said first sensor signal is driven toward a minimum.

3. Sensor according to claim 1 or 2, characterized in that said sensor characterizing means or said bias control generating means, respectively, includes lock-in error parameter means (140, 940) responsive to said at least one output signal of said sensing means for determining at least a first lock-in error parameter which corresponds to the accumulation of lock-in error in said first sensor signal.

4. Sensor according to claim 3, characterized in that said lock-in error parameter means includes incremental error parameter means (503, 504, 505) capable of providing at lesat a first incremental error parameter which is related to an incremental change in said lock-in error in said first sensor signal, said first lock-in error parameter being a function of a said incremental error parameter.

5. Sensor according to claim 4, characterized in that said incremental error parameter means includes phase angle determining means (503) for determining phase angle values, ψ, of said phase relationship between said waves at selected values of dψ/dt, said first incremental error parameter being a function of at least one of said phase angle values.

6. Sensor according to claim 5, characterized in that said incremental error parameter means further includes trigonometric function means (504) for providing said first incremental error parameter, said first incremental error parameter being a trigonometric function of at least one of said phase angle values.

7. Sensor according to claim 6, characterized in that:

said incremental error parameter means is further capable of providing a plurality of incremental error parameters including said first incremental error parameter each of which is based on at least one of said phase angle values, and said trigonometric function means being capable of providing said plurality of incremental error parameters, each being a trigonometric function of one of said phase angle values;

said lock-in error parameter (140, 940) means further includes accumulating means (506) for summing selected ones of said plurality of incremental error parameters and providing a first sum thereof, said first lock-in error parameter being said first sum which corresponds to the accumulation of said lock-in error in said first sensor signal.

8. Sensor according to claim 7, characterized in that:

said lock-in error parameter means (140, 940) is capable of providing a plurality of lock-in error parameters including said first lock-in error parameter, each of said lock-in error parameters corresponding to the accumulation of lock-in error in said first sensor signal; and

said accumulating means (506) is capable of providing a plurality of selected sums including said first sum, each sum being the summation of selected ones of said incremental error parameters, each of said lock-in error parameters being a function of at least one of said selected sums.

9. Sensor according to claim 8, characterized in that:

said phase angle determining means includes means (502) capable of determining ZRC phase angle values, said ZRC phase angle values being substantially said phase angle values of said phase relationship at values of dψ/dt being zero; and

said trigonometric function means includes means (504) for determining sine and cosine function values of said ZRC phase angle values, each of said incremental error parameters being a function of a selected one of said sine and cosine function values thereof.

10. Sensor according to claim 9, characterized in that said lock-in error parameter (140, 940) means includes:

means (503) for determining a second derivative value with respect to time of said phase relationship between said waves at substantially values of dψ/dt being zero; and

processing means (505) for generating said plurality of incremental error parameters being substantially of the form:

$$\Delta F_1 = \frac{\cos\psi_o^+}{\sqrt{|\ddot{\psi}_o^+|}} \qquad \Delta F_3 = \frac{\cos\psi_o^-}{\sqrt{|\ddot{\psi}_o^-|}}$$

$$\Delta F_2 = \frac{\sin\psi_o^+}{\sqrt{|\ddot{\psi}_o^+|}} \qquad \Delta F_4 = \frac{\sin\psi_o^-}{\sqrt{|\ddot{\psi}_o^-|}}$$

where

$\ddot{\psi}_o^+, \ddot{\psi}_o^-$ are positive and negative values of said second derivative value, respectively;

$\psi_o^+$ is said ZRC phase angle when $\ddot{\psi}_o$ is positive;

$\psi_o^-$ is said ZRC phase angle when $\ddot{\psi}_o$ is negative; and

$\Delta F_1$ are said incremental error parameters.

11. Sensor according to claim 10, characterized in that said lock-in error parameter means generates said lock-in error parameters being functions of said selected sums substantially of the form:

$$F_i = f\left\{ \sum_{j=1}^{m} \Delta F_{nj} \right\}$$

where

i=1, 2, 3, 4

n=1, 2, 3, 4

where the summation, m, corresponds to a number of occurring ZRC phase angles.

12. Sensor according to claim 10, characterized in that said lock-in error parameter means generates said lock-in error parameters being functions of said selected sums substantially of the functional form:

$$F_i = f\left\{ \sum_{j=1}^{m} \Delta F_{nj} \right\}$$

where

i=1, 2, 3, 4

n=1, 2, 3, 4

where the summation, m, corresponds to a number of successive occurring ZRC phase angles having the same polarity of the second derivative thereof, $d^2\psi/dt^2$.

13. Sensor according to claim 2 or one of the following claims, characterized in that said biasing means (130) is capable of introducing a varying frequency bias in at least one of said waves resulting in a rate of change of said phase relationship between said waves to pass through zero at least once.

14. Sensor according to claim 11, characterized in that said sensor characterizing means further includes signal processing means (150) having as inputs corresponding signals representative of said lock-in error parameters, signals representative of known angular rotations of said sensor, and signals representative of said first sensor signal, said signal processing means combining said inputs and generating said sensor characteristic signature coefficients of a polynomial representative of the lock-in error function of said angular rate sensor.

15. Sensor according to claim 14, characterized in that said polynomial representative of said lock-in error function is substantially of the form:

$$\tilde{\theta} - \theta_R = C_1 F_1 + C_2 F_2 + C_3 F_3 + C_4 F_4$$

where

$\theta_R$ is said known angular rotation of said sensor;

$\tilde{\theta}$ is the said first sensor signal;

C1, are said characteristic signature coefficients;

F1, are said lock-in error parameters.

16. Sensor according to claim 11, characterized in that said signal processing means (150) includes means for performing a linear regression date analysis on said inputs for determining said coefficients.

17. Sensor according to claim 2, characterized in that said bias control signal generating means includes signal processing means (950) responsive to said at least a first lock-in error parameter for determining a phase angle value of said phase relationship at a first occurrence of a selected value of $d\psi/dt$ such that said lock-in error in said sensor is driven toward a minimum, said signal processing means providing said bias control signal so that said biasing means varies said at least one of said waves so that said phase between said waves takes on said signal processing means determined phase angle value at said first occurrence of a selected value of $d\psi/dt$.

18. Sensor according to claim 13, characterized in that said biasing means (130) introduces a frequency bias in each of said waves such that the frequency difference therebetween varies in a sinusoidal manner.

19. Sensor according to claim 1 or one of the following claims, characterized in that said sensor characterizing means comprises:

first signal processing means (120) responsive to said at least one output signal of said sensor means (110) for providing a first sensor signal representative of the rotation of said closed-loop path but which includes an accumulation of lock-in error inherent in said sensor;

second signal processing means (140, 150) responsive to said at least one output signal of said sensor means (110) for providing an output signal representative of the accumulated lock-in error in said first signal processing means output signal from which lock-in error can be determined; and

third signal processing means (160) combining said first signal processing means output signal and said second signal processing means output signal and providing an output signal representative of the rotation of said closed-loop path substantially free of lock-in error components.

20. Sensor according to claim 19, characterized in that said second signal processing means (140) comprises:

rate detection means (613) responsive to said sensing means at least one output signal for determining occurrences of second selected values of said rate of change of said phase relationship, said rate detection means providing an output signal having a selected signal change indicative of said second selected occurrences;

sign detection means (601, 602, 603) responsive to said sensing means (110) for detecting occurrrences of selected values of said sensing means at least one output signal, said signal processing means providing an output signal having a selected signal change indicative of said occurrences of selected values of said sesning means at least one output signal;

timing means (611, 614, 615, 616, 618) responsive to said signal processing means output signal for determining incremental times between selected ones of said occurrences of selected values of said sensing means at least one output signal;

phase determining means (617) responsive to said rate detection means output signal and said incremental times for determining said phase values at said first selected values of the rate of change of said phase relationship based on said incremental times.

21. Sensor according to claim 20, characterized in that portions of said timing means and said phase determining means (611 to 617) are provided by a single signal processor.

22. Sensor according to claim 21, characterized in that said single signal processor is a microprocessor.

23. In a dithered angular rate sensor wherein two propagating electromagnetic waves propagate in opposite directions about a closed-loop path, the frequency of each of said waves is a function of the rate of rotation of said closed-loop path and there being a phase relationship established between said waves also being a function of the rate of rotation of said closed-loop path, and wherein said sensor generates a first sensor signal related to the true angular rotation of said sensor but which includes lock-in error inherent in said sensor, and wherein said angular rate sensor is responsive to a biasing means capable of introducing a varying frequency bias in at least one of said waves and resulting in a rate of change of said phase relationship to pass through zero at least once, a method of obtaining a second sensor signal indicative of rotation of said sensor substantially excluding lock-in error inherent in said sensor, characterized by:

calibrating said sensor comprising the steps of:

recording data pairs of data representative of known angular rotations of said sensor and corresponding data representative of the sensors response thereto provided by said first sensor signal but which includes lock-in error;

obtaining incremental error parameter data corresponding to said data pairs derived from said phase relationship between said waves, said incremental error parameter data being related to incremental changes in said lock-in error in said first sensor signal;

accumulating selected ones of said incremental error parameter data and recording selected accumulations thereof corresponding to the accumulation of lock-in error in said first sensor signal data for each of said data pairs;

analytically processing said accumulations of said incremental error parameter data and said data pairs and generating a plurality of characteristic signature coefficients of a polynomial representative of a lock-in error function of said sesnor such that the contribution of lock-in error associated with said data pairs is substantially characterized;

operating said angular rate sensor comprising the steps of:

obtaining incremental error parameter data corresponding to said first sensor signal derived from said phase relationship between said waves, said incremental error parameter data being related to incremental changes in said lock-in error in said first sensor signal;

accumulating selected ones of said incremental error parameter data and recording selected accumulations thereof corresponding to the accumulation of lock-in error in said first sensor signal;

processing said selected accumulations of said incremental error parameters, said first sensor signals, and said characteristic signature coefficients and generating said second sensor signal corrected for lock-in error substantially free of lock-in error components.

24. Method according to claim 23, characterized in that said sensor lock-in error function is of the form:

$$\bar{\theta}-\theta_R=C_1F_1+C_2F_2+C_3F_3+...$$

where:

$\theta_R$ is said known angular rotation;

$\bar{\theta}$ is said first sensor signal;

C1, are said characteristic signature coefficients; and

P1, are said selective accumulations of said incremental error parameters;

and said second sensor signal corrected for lock-in error is substantially of the form:

$$\theta_c=\bar{\theta}-\{C_1F_1+C_2F_2+C_3F_3+...\}$$

where:

$\theta_c$ is said second sensor signal;

$\bar{\theta}$ is said first sensor signal;

C1, are said characteristic signature coefficients; and

F1, are said selective accumulations of said incremental error parameters.

# EP 0 069 366 B1

## Patentansprüche

1. Winkelgeschwindigkeitssensor (10) des Typs, bei dem zwei elektromagnetische Wellen in entgegengesetzten Richtungen umläufen, wobei jede Welle im wesentlichen eine geschlossene Schleifenstrecke durchläuft, die Frequenz jeder Welle eine Funktion der Drehgeschwindigkeit der geschlossenen Schleifenstrecke ist und eine Phasenbeziehung zwischen den Wellen ebenfalls eine Funktion der Drehgeschwindigkeit der geschlossenen Schleifenstrecku ist, wobei der Sensor ein erstes Sensorsignal erzeugt, das auf die tatsächliche Drehgeschwindigkeit des Sensors bezogen ist aber einen dem Sensor anhaftenden Mitziehfehler aufweist und wobei der Winkelgeschwindigkeitssensor eine überlagerungseinrichtung (130) umfaßt, die in wenigstens einer der Wellen eine veränderliche Frequenzüberlagerung einführt, welche in einer wenigstens einmal durch Null gehenden Änderungsgeschwindigkeit der Phasenbeziehung zwischen den Wellen resultiert, umfassend:

eine Fühleinrichtung (110), die auf wenigstens eine der Wellen anspricht, um wenigstens ein Ausgangssignal vorzugeben, das die Phasenbeziehung anzeigt und die eine Phasenwinkel-Bestimmungseinrichtung einschließt und auf das wenigstens eine Ausgangssignal der Fühleinrichtung anspricht, um einen Phasenwinkelwert ψ entsprechend der Phasenbeziehung zwischen den Wellen vorzugeben, dadurch gekennzeichnet,

daß die Phasenwinkel-Bestimmungseinrichtung (110) den Phasenwinkelwert ψ zu jenen Zeitpunkten bestimmt, in denen die erste zeitliche Ableitung dψ/dt der Phasenbeziehung ausgewählte Werte aufweist; und daß Sensor-Charakterisiereinrichtungen (140, 150) auf ausgewählte Phasenwinkelwerte ansprechen, um Sensorcharakteristik-Signaturkoeffizienten einer den Sensor beschreibenden Mitziehfehlerfunktion zu erhalten, woraus der dem ersten Sensorsignal zugeordnete Mitziehfehler bestimmt werden kann.

2. Sensor nach Anspruch 1, gekennzeichnet durch:

eine überlagerungseinrichtung (930), der an einer Eingangsklemme ein überlagerungs-Steuersignal zugeführt wird, wobei die überlagerungseinrichtung wenigstens eine der Wellen so variieren kann, daß die Phase ψ der Phasenbeziehung ausgewählte Werte aufgrund des überlagerungs-Steuersignales in ausgewählten Zeitpunkten einnimmt, wenn ausgewählte erste Ableitungswerte der Phasenbeziehung dψ/dt auftreten;

eine überlagerungs-Steuersignal-Erzeugungseinrichtung (940, 950), die auf die Fühleinrichtung (910) anspricht, um das überlagerungs-Steuersignal zu erzeugen, zu daß der Mitzienfehler in den ersten Sensorsignal gegen ein Minimum gesteuert wird.

3. Sensor nach Anspruch 1 oder 2, dadurch gekennzeichnet, daß die Sensor-Charakterisiereinrichtung bzw. die überlagerungs-Steuersignal-Erzeugungseinrichtung eine Mitziehfehler-Parametereinrichtung (140, 940) umfaßt, die auf das wenigstens eine Ausgangssignal der Fühleinrichtung anspricht, um wenigstens einen ersten Mitziehfehlerparameter zu bestimmen, der dem akkumulierten Mitziehfehler in dem ersten Sensorsignal entspricht.

4. Sensor nach Anspruch 3, dadurch gekennzeichnet, daß die Mitziehfehler-Parametereinrichtung eine inkrementale Fehlerparametereinrichtung (503, 504, 505) umfaßt, welche wenigstens einen ersten inkrementalen Fehlerparameter liefern kann, der auf eine inkrementale Änderung des Mitziehfehlers in dem ersten Sensorsignal bezogen ist, wobei der erste Mitziehfehlerparameter eine Funktion des inkrementalen Fehlerparameters ist.

5. Sensor nach Anspruch 4, dadurch gekenzneichnet, daß die inkrementale Fehlerparametereinrichtung eine Phasenwinkel Bestimmungseinrichtung (503) aufweist zur Bestimmung der Phasenwinkelweise ψ der Phasenbeziehung zwischen den Wellen bei ausgewählten Werten von dψ/dt, wobei der erste inkrementale Fehlerparameter eine Funktion von wenigstens einem der Phasenwinkelwerte ist.

6. Sensor nach Anspruch 5, dadurch gekennzeichnet, daß die inkrementale, Fehlerparametereinrichtung ferner eine trigonometrische Funktionseinrichtung (504) zur Vorgabe des ersten inkrementalen Fehlerparameters aufweist, wobei der erste inkrementale Fehlerparameter eine trigonometrische Funktion von wenigstens einem der Phasenwinkelwerte ist.

7. Sensor nach Anspruch 6, dadurch gekennzeichnet, daß die inkrementale Fehlerparametereinrichtung ferner in der Lage ist, mehrere inkrementale Fehlerparameter einschließlich des ersten inkrementalen Fehlerparameters zu liefern, wobei jeder auf wenigstens einem der Phasenwinkelweise basiert und daß die trigonometrische Funktionseinrichtung in der Lage ist, diese mehrere inkrementalen Fehlerparameter zu liefern, wobei jeder eine trigonometrische Funktion einer der Phasenwinkelwerte ist:

daß die Mitziehfehler-Parametereinrichtung (140, 940) ferner eine Akkumulationseinrichtung (506) umfaßt, um ausgewählte inkrementale Fehlerparameter zu summieren und eine erste Summe vorzugeben, wobei der erste Mitziehfehlerparameter die erste Summe ist, die der Akkumulierung des Mitziehfehlers in dem ersten Sensorsignal entspricht.

8. Sensor nach Anspruch 7, dadurch gekennzeichnet:

daß die Mitziehfehler-Parametereinrichtung (140, 940) in der Lage ist, mehrere Mitziehfehlerparameter einschließlich des ersten Mitziehfehlerparameters zu liefern, wobei jeder Mitziehfehlerparameter der Akkumulierung des Mitziehfehlers in dem ersten Sensorsignal entspricht; und

daß die Akkumulationseinrichtung (506) in der Lage ist, mehrere ausgewählte Summen einschließlich

27

der ersten Summe zu liefern, wobei jede Summe die Summation ausgewähler inkrementaler Fehlerparameter darstellt und jeder Mitziehfehlerparameter eine Funktion wenigstens einer der ausgewählen Summen ist.

9. Sensor nach Anspruch 8, dadurch gekennzeichnet:

daß die Phasenwinkel-Bestimmungseinrichtung Einrichtungen (502) zur Bestimmung der ZRC Phasenwinkelwerte umfaßt, wobei die ZRC-Phasenwinkelwerte im wesentlichen die Phasenwinkelwerte der Phasenbeziehung bei $d\psi/dt=0$ sind; und

daß die trigonometrische Funktionseinrichtung Einrichtungen (504) umfaßt, um Sinus- und Kosinus-Funktionswerte der ZRC Phasenwinkelwerte festzulegen, wobei jeder inkrementale Fehlerparameter eine Funktion ausgewählter Sinus- und Kosinus-Funktionswerte ist.

10. Sensor nach Anspruch 9, dadurch gekennzeichnet, daß die Mitziehfehler-Parametereinrichtung (140, 940) umfaßt:

eine Einrichtung (503) zur Bestimmung eines zweiten Ableitungswertes bezogen auf den seitlichen Verlauf der Phasenbeziehung zwischen den Wellen bei Werten, wo $d\psi/dt=0$ ist; und

eine Verarbeitungseinrichtung (505) zur Erzeugung der mehreren inkrementalen Fehlerparameter im wesentlichen folgender Form:

$$\Delta F_1 = \frac{\cos\psi_o^+}{\sqrt{|\ddot{\psi}_o^+|}} \qquad \Delta F_3 = \frac{\cos\psi_o^-}{\sqrt{|\ddot{\psi}_o^-|}}$$

$$\Delta F_2 = \frac{\sin\psi_o^+}{\sqrt{|\ddot{\psi}_o^+|}} \qquad \Delta F_4 = \frac{\sin\psi_o^-}{\sqrt{|\ddot{\psi}_o^-|}}$$

wobei

$\ddot{\psi}_o^+$, $\ddot{\psi}_o^-$ positive und negative Werte entsprechend des zweiten Ableitungswertes sind;

$\psi_o^+$ dem ZRC Phasenwinkel entspricht, wenn $\ddot{\psi}_o$ positiv ist;

$\psi_o^-$ dem ZRC Phasenwinkel entspricht, wenn $\ddot{\psi}_o$ negativ ist; und

$\Delta F_1$ die inkrementalen Fehlerparameter sind.

11. Sensor nach Anspruch 10, dadurch gekennzeichnet, daß die Mitziehfehler-Parametereinrichtung Mitziehfehlerparameter erzeugt, die Funktionen der ausgewählten Summen sind und im wesentlichen folgende Form aufweisen:

$$F_i = f\left\{ \sum_{j=1}^{m} \Delta F_{nj} \right\}$$

wobei

$i=1, 2, 3, 4$

$n=1, 2, 3, 4$

wobei die Summation m eine Anzahl von auftretenden ZRC Phasenwinkeln entspricht.

12. Sensor nach Anspruch 10, dadurch gekennzeichnet, daß die Mitziehfehler-Parametereinrichtung die Mitziehfahlerparameter erzeugt, die Funktionen der ausgewählten Summen sind und im wesentlichen folgende Form aufweisen:

$$F_i = f\left\{ \sum_{j=1}^{m} \Delta F_{nj} \right\}$$

wobei

$i=1, 2, 3, 4$

$n=1, 2, 3, 4$

wobei die Summation m eine Anzahl von aufeinanderfolgend auftretenden ZRC-Phasenwinkeln entspricht, die die gleiche Polarität der zweiten Ableitung $d^2\psi/dt^2$ aufweisen.

13. Sensor nach Anspruch 2 oder einem der folgenden Ansprüche, dadurch gekennzeichnet, daß die überlagerungseinrichtung (130) in der Lage ist, eine veränderliche Frequenzüberlagerung in wenigstens eine der Wellen einzuführen, was zu einer Änderungsgeschwindigkeit der Phasenbeziehung zwischen den Wellen und zu wenigstens einem Nulldurchgang führt.

14. Sensor nach Anspruch 11, dadurch gekennzeichnet, daß die Sensor-Charakterisierungseinrichtung ferner eine Signalverarbeitungseinheit (150) umfaßt, der als Eingangssignal Signale entsprechend des Mitziehfehlerparameters, Signale entsprechend der bekannten Winkeldrehung des Sensors und Signale entsprechend dem ersten Sensorsignal zugeführt werden und die die Eingangssignale kombiniert und die Sensorcharakteristik-Signaturkoeffizienten eines Polynoms erzeugt, das die Mitziehfehlerfunktion des Winkelgeschwindigkeitssensors repräsentiert.

28

15. Sensor nach Anspruch 14, dadurch gekennzeichnet, daß die Polynomdarstellung der Mitziehfehlerfunktion im wesentlichen folgende Form aufweist:

$$\bar{\theta} - \theta_R = C_1 F_1 + C_2 F_2 + C_3 F_3$$

wobei

$\theta_R$ die bekannte Winkelgeschwindigkeit des Sensors ist;

$\bar{\theta}$ das erste Sensorsignal ist;

$C_1$, die charackteristischen Signaturkoeffizienten sind;

$F_1$ die Mitziehfehlerparameter sind.

16. Sensor nach Anspruch 11, dadurch gekennziechnet, daß die Signalverarbeitungseinrichtung (150) Mittel zur Ausführung einer linearen Regressions-Datenanalyse der Eingangssignale umfaßt, um die Koeffizienten zu bestimmen.

17. Sensor nach Anspruch 2, dadurch gekennzeichnet, daß die überlagerungs-Steuersignal-Erzeugungseinrichtung eine Signalverarbeitungseinrichtung (950) aufweist, die auf wenigstens einen ersten Mitziehfehlerparameter anspricht, um einen Phasenwinkelwert der Phasenbeziehung bei einem ersten Auftritt eines ausgewählten Wertes von dψ/dt so festzulegen, daß der Mitziehfehler in dem Sensor gegen ein Minimum geht, wobei die Signalverarbeitungseinrichtung das überlagerungs-Steuersignal und die überlagerungseinrichtung wenigstens eine der Wellen so ändert, daß die Phase zwischen den Wellen den durch die Signalverarbeitungseinrichtung festgelegten Phasenwinkelwert bei dem ersten Auftritt eines ausgewählten Wertes von dψ/dt aufweist.

18. Sensor nach Anspruch 13, dadurch gekennzeichnet, daß die überlagerungseinrichtung (130) eine überlagerungsfrequenz in jeder der Wellen so einführt, daß die Frequenzdifferenz zwischen beiden Wellen gemäß einem Sinus variiert.

19. Sensor nach Anspruch 1 oder einem der folgenden Ansprüche, dadurch gekennzeichnet, daß die Sensor-Charakterisiereinrichtung umfaßt:

eine ersten Signalverarbeitungseinrichtung (120), die auf wenigstens ein Ausgangssignal der Fühleinrichtung (110) anspricht, um ein erstes Sensorsignal entsprechend der Drehung der geschlossenen Schleifenstrecke zu liefern, welches aber eine Akkumulierung des dem Sensor anhaftenden Mitziehfehlers heinhaltet;

eine zweite Signalverarbeitungseinrichtung (140, 150), die auf wenigstens ein Ausgangssignal der Fühleinrichtung (110) anspricht, um ein Ausgangssignal entsprechend dem akkumulierten Mitziehfehler in dem Ausgangssignal der ersten Signalverarbeitungseinrichtung zu liefern, aus dem der Mitziehfehler bestimmt werden kann; und

eine dritte Signalverarbeitungseinrichtung (160) zur Kombination des Ausgangssignales der ersten Signalverarbeitungseinrichtung und des Ausgangssignales der zweiten Signalverarbeitungseinrichtung und zur Lieferung eines Ausgangssignales entsprechend der Drehung der geschlossenen Schleifenstrecke, das im wesentlichen frei von Mitziehfehlerkomponenten ist.

20. Sensor nach Anspruch 19, dadurch gekennzeichnet, daß die zweite Signalverarbeitungseinrichtung (140) umfaßt:

eine Geschwindigkeits-Feststelleinrichtung (613), die auf das wenigstens eine Ausgangssignal der Fühleinrichtung anspricht, um die Auftritte der zweiten Ausgewählten Werte der Änderungsgeschwindigkeit der Phasenbeziehung festzustellen, wobei die Geschwindigkeits-Feststelleinrichtung ein Ausgangssignal mit einer ausgewählten Signaländerung liefert, das die zweiten ausgewählten Auftritte anzeigt:

eine Vorzeichen-Feststelleinrichtung (601, 602, 603), die auf die Fühleinrichtung (110) anspricht, um Auftritte der ausgewählten Werte in dem wenigstens einen Ausgangssignal der Fühleinrichtung festzustellen, wobei die Signalverarbeitungseinrichtung ein Ausgangssignal liefert, das eine ausgewählte Signaländerung besitzt und die Auftritte der ausgewählten Werte in dem wenigstens einen Ausgangssignal der Fühleinrichtung anzeigt;

auf das Ausgangssignal der Signalverarbeitungseinrichtung ansprechende Zeitgebereinrichtungen (611, 614, 615, 616, 618) zur Festlegung von Zeitinkrementen zwischen ausgewählten Auftritten ausgewählter Werte in dem wenigstens einen Ausgangssignal der Fühleinrichtung;

eine Phasen-Bestimmungseinrichtung (617), die auf das Ausgangssignal der Geschwindigkeits-Feststelleinrichtung und die Zeitinkremente anspricht, um die Phasenwerte bei den ersten ausgewählten Werten der Änderungsgeschwindigkeit der Phasenbeziehung basierend auf den Zeitinkrementen festzustellen.

21. Sensor nach Anspruch 20, dadurch gekennzeichnet, daß Teile der Zeitgebereinrichtungen und der Phasen-Bestimmungseinrichtung (611—617) durch einen einzigen Signalprozessor vorgegeben sind.

22. Sensor nach Anspruch 21, dadurch gekennzeichnet, daß der Signalprozessor ein Mikroprozessor ist.

23. In einem vibrierenden Winkelgeschwindigkeitssensor, bei welchem sich zwei elektromagnetische Wellen in entgegengesetzten Richtungen entlang einer geschlossenen Schleifenstrecke fortpflanzen, die Frequenz jeder Welle eine Funktion der Drehgeschwindigkeit der geschlossenen Schleifenstrecke ist und eine Phasenbeziehung zwischen den Wellen ebenfalls eine Funktion der Drehgeschwindigkeit der

29

geschlossenen Schleifenstrecke ist, wobei der Sensor ein erstes Sensorsignal erzeugt, das auf die tatsächliche Drehgeschwindigkeit des Sensors bezogen ist, aber einen dem Sensor anhaftenden Mitziehfehler aufweist und wobei der Winkelgeschwindigkeitssensor auf eine überlagerungseinrichtung anspricht, die eine veränderliche Frequenzüberlagerung in wenigstens eine der Wellen einführt, welche in einer wenigstens einmal durch Null gehenden Änderungsgeschwindigkeit der Phasenbeziehung zwischen den Wellen resultiert, ist iein Verfahren zur Erzeugung eines zweiten Sensorsignales zur Anzeige der Sensordrehung unter Ausschluß des dem Sensor anhaftenden Mitziehfehlers gekennzeichnet durch:

eine Kalibrierung des Sensors, welche die Schritte umfaßt:

Auszeichnung von Datenpaaren aus Daten entsprechend bekannter Winkeldrehungen des Sensors und von korrespondierenden Daten entsprechend der Sensorantwort, die durch das erste Sensorsignal geliefert werden, aber den Mitzeihfehler umfassen;

Ermittlung inkrementaler Fehlerparameterdaten entsprechend den Datenpaaren, die aus der Phasenbeziehung zwischen den Wellen abgeleitet werden, wobei die inkrementalen Fehlerparameterdaten den inkrementalen Änderungen des Mitziehfehlers in dem ersten Sensorsignal zugeordnet sind;

Akkumulierung ausgewählter inkrementaler Fehlerparameterdaten und Auszeichnung ausgwählter Akkumulierungen aus diesen entspechend der Akkumulierung des Mitziehfehlers in den Daten für jedes der Datenpaare des ersten Sensorsignales;

analytische Verarbeitung der Akkumulierungen der inkrementalen Fehlerparameterdaten und der Datenparre und Erzeugung mehrerer charakteristischer Signaturkoeffizienten eines Polynoms entsprechend einer Mitzeihfehlerfunktion des Sensors, so daß der Beitrag des den Datenpaaren zugeordneten Mitziehfahlers im wesentlichen charakterisiert ist:

einen Betrieb des Winkelgeschwindigkeitssensors, der die Schritte umfaßt:

Ermittlung inkrementaler Fehlerparameterdaten entsprechend dem ersten Sensorsignal, das von der Phasenbeziehung zwischen den Wellen abgeleitet ist, wobei die inkrementalen Fehlerparameterdaten inkrementalen Änderungen des Mitziehfehlers in dem ersten Sensorsignal zugeordnet sind;

Akkumulierung ausgewählter inkrementaler Fehlerparameterdaten und Aufzeichnung ausgewählter Akkumulierungen aus diesen entsprechend der Akkumulierung des Mitziehfehlers in dem ersten Sensorsignal;

Verarbeitung ausgewählter Akkumulierungen der inkrementalen Fehlerparameter, der ersten Sensorsignale und der charakteristischen Signaturkoeffizienten und Erzeugung des zweiten Sensorsignales, das bezüglich des Mitziehfehlers korrigiert und im wesentlichen frei von Mitziehfehlerkomponenten ist.

24. Verfahren nach Anspruch 23, dadurch gekennzeichnet, daß die Mitziehfehlerfunktion des Sensors die Form aufweist:

$$\bar{\theta}-\theta_R = C_1F_1 + C_2F_2 + C_3F_3\ldots$$

wobei:

$\theta_R$ die bekannte Winkeldrehung ist;

$\bar{\theta}$ das erste Sensorsignal ist;

C1, charakteristische Signaturkoeffizienten sind; und

F1, selektive Akkumulierungen der inkrementalen Fehlerparameter sind;

und wobei das zweite bezüglich des Mitziehfehlers korrigierte Sensorsignal im wesentlichen die Form aufweist:

$$\theta_c = \bar{\theta} - \{C_1F_1 + C_2F_2 + C_3F_3 + \ldots$$

wobei:

$\theta_c$ das zweite Sensorsignal ist;

$\bar{\theta}$ das erste Sensorsignal ist;

C1, charakteristische Signaturkoeffizienten sind; und

F1, selektive Akkumulierungen der inkrementalen Fehlerparameter sind.

**Revendications**

1. Détecteur de vitesse angulaire (10) du type dans lequel deux ondes électromagnétiques se déplacement en sens opposé, chaque onde se déplaçant sensiblement selon un trajet en boucle fermée, dans laquelle la fréquence de chacune des ondes est fonction de la vitesse de rotation dudit trajet en boucle fermée, une relation de phase étant établie entre ces ondes qui est également fonction de la vitesse de rotation du trajet en boucle fermée, dans lequel le détecteur produit un premier signal de détecteur associé à la rotation angulaire vraie du détecteur mais qui comprend une erreur de verrouillage inérente au détecteur, et dans lequel le détecteur de vitesse angulaire comprend des moyens de polarisation (130) capables d'introduire une polarisation à fréquence variable dans au moins une des ondes, d'où il résulte un taux de changement de la relation de phase entre les ondes qui passe par zéro au moins une fois, comprenant:

EP 0 069 366 B1

des moyens de détection (110) sensibles à au moins l'une des ondes pour fournir au moins un signal de sortie qui est indicatif de ladite relation de phase, et comprenant des moyens de détermination d'angle de phase, sensibles audit au moins un signal de sortie des moyens de détection, pour déterminer une valeur d'angle de phase, $\psi$, correspondant à la relation de phase entre les ondes, caractérisé par

lesdits moyens de détermination d'angle de phase (110) déterminant la valeur d'angle de phase, $\psi$, aux instants ayant des valeurs choisies de la dérivée première dans le temps $d\psi/dt$ de la relation de phase; et des moyens caractérisant le détecteur (140, 150) sensibles à des valeurs choisies de l'angle de phase pour obtenir des coefficients de signature caractéristique du détecteur d'une fonction d'erreur de verrouillage spécifique du détecteur à partir de laquelle l'erreur de verrouillage associée au premier signal du détecteur peut être déterminée.

2. Détecteur selon la revendication 1, caractérisé par:

des moyens de polarisation (930) ayant une borne d'entrée adaptée à recevoir un signal de commande de polarisation, ces moyens de polarisation pouvant faire varier au moins l'une des ondes de sorte que la phase $\psi$ de ladite relation de phase prend des valeurs choisies en réponse au signal de commande de polarisation lors d'apparitions choisies de ces instants quand des valeurs choisies de la dérivéee première de la relation de phase $d\psi/dt$ surviennent;

des moyens de génération de signal de commande de polarisation (940, 950) sensibles aux moyens de détection (910) pour produire le signal de commande de polarisation de sorte que l'erreur de verrouillage dans le premier signal de détecteur est amenée vers un minimum.

3. Détecteur selon l'une des revendication 1 ou 2, caractérisé en ce que les moyens de caractérisation du détecteur ou les moyens de génération de commande de polarisation, respectivement, comprennent des moyens de paramètres d'erreur de verrouillage (140, 940) sensibles audit au moins un signal de sortie des moyens de détection pour déterminer au moins un premier paramètre d'erreur de verrouillage qui correspond à l'accumulation de l'erreur de verrouillage dans le premier signal de détecteur.

4. Détecteur selon la revendication 3, caractérisé en ce que les moyens de paramètre d'erreur de verrouillage comprennent des moyens de paramètre d'erreur incrémentielle (503, 504, 505) capables de fournir au moins un premier paramètre d'erreur incrémentielle qui est associé à un changement incrémentiel de l'erreur de verrouillage dans le premier signal de détecteur, le premier paramètre d'erreur de verrouillage étant une fonction du paramètre d'erreur incrémentielle.

5. Détecteur selon la revendication 4, caractérisé en ce que les moyens de paramètre d'erreur incrémentielle comprennent des moyens de détermination d'angle de phase (503) pour déterminer des valeurs d'angle de phase $\psi$ de la rotation ds phase entre les ondes à des valeurs choisies de $d\psi/dt$, le premier paramètre d'erreur incrémentielle étant fonction d'au moins une des valeurs d'angel de phase.

6. Détecteur selon la revendication 5, caractérisé en ce que les moyens de paramètre d'erreur incrémentielle comprennent en outre des moyens de fonction trigonomètrique (504) pour fournir le premier paramètre d'erreur incrémentielle, le premier paramètre d'erreur incrémentielle étant une fonction trigonométrique d'au moins une des valeurs d'angle de phase.

7. Détecteur selon la revendication 6, caractérisé en ce que:

les moyens de paramètre d'erreur incrémentielle peuvent en outre fournir les pluralités de paramètres d'erreur incrémentielle comprenant le premier paramètre d'erreur incrémentielle, chacun étant basé sur au moins l'une des valeurs d'angle de phase, et des moyens de fonction trigonométrique pouvant fournir ladite pluralité de paramètres d'erreur incrémentielle, chacun étant une fonction trigonométrique de l'une des valeurs d'angle de phase;

les moyens de paramètre d'erreur de verrouillage (140, 940) comprennent en outre des moyens d'accumulation (506) pour sommer certains choisis de la pluralité de paramètres d'erreurs incrémentielles et fournir une première somme de ces paramètres, le premier paramètre d'erreur de verrouillage étant ladite première somme qui correspond à l'accumulation de l'erreur de verrouillage dans le premier signal de détecteur.

8. Détecteur selon la revendication 7, caractérisé en ce que:

les moyens de paramètres d'erreur de verrouillage (140, 940) peuvent fournir une pluralité de paramètres d'erreur de verrouillage comprenant le premier paramètre d'erreur de verrouillage, chacun des paramètres d'erreur de verrouillage correspondant à l'accumulation de l'erreur de verrouillage dans le premier signal de détecteur; et

le premier moyen d'accumulation (506) peut fournir une pluralité de sommes choisies comprenant la première somme, chaque somme étant la somme de certains choisis des paramètres d'erreur incrémentielle, chacun des paramètres d'erreur de verrouillage étant fonction d'au moins l'une desdites sommes choisies.

9. Détecteur selon la revendication 8, caractérisé en ce que:

les moyens de détermination d'angle de phase comprennent des moyens (502) capables de déterminer des valeurs d'angle de phase ZRC, ces valeurs d'angle de phase ZRC étant sensiblement les valeurs d'angle de phase de ladite relation de phase pour des valeurs de $d\psi/dt$ égales à zéro; et

les moyens de fonction trigonométrique comprennent des moyens (504) pour déterminer les valeurs de la fonction sinus et cosinus des valeurs d'angle de phase ZRC, chacun des paramètres d'erreur incrémentielle étant fonction de l'une choisie des valeurs de fonction sinus et cosinus.

10. Détecteur selon la revendication 9, caractérisé en ce que les moyens de paramètre d'erreur de verrouillage (140, 940) comprennent:

des moyens (503) pour déterminer une valeur de dérivée seconde par rapport au temps de la relation de phase entre les ondes pour des valeurs de $d\psi/dt$ sensiblement égales à zéro; et

les moyens de traitement (505) pour produire ladite pluralité de paramètres d'erreur incrémentielle sont sensiblement du type

$$\Delta F1 = \frac{\cos\psi_o^+}{\sqrt{|\ddot{\psi}_o^+|}} \qquad \Delta F3 = \frac{\cos\psi_o^-}{\sqrt{|\ddot{\psi}_o^-|}}$$

$$\Delta F2 = \frac{\sin\psi_o^+}{\sqrt{|\ddot{\psi}_o^+|}} \qquad \Delta F4 = \frac{\sin\psi_o^-}{\sqrt{|\ddot{\psi}_o^-|}}$$

$\ddot{\psi}_o^+$, $\ddot{\psi}_o^-$ sont les valeurs positives et négatives de la valeur de la dérivée seconde, respectivement;

$\psi_o^+$ est l'angle de phase ZRC quand $\psi_o$ st positif;

$\psi_o^-$ est l'angle de phase ZRC quand $\psi_o$ est négatif; et

$\Delta F1$ sont les paramètres d'erreur incrémentielle.

11. Détecteur selon la revendication 10, caractérisé en ce que les moyens de paramètres d'erreur de verrouillage produisent les paramètres d'erreur de verrouillage qui sont fonction des sommes choisies sensiblement de la forme

$$F_i = f\left\{ \sum_{j=1}^{m} \Delta F_{nj} \right\}$$

ou

$i = 1, 2, 3, 4$

$n = 1, 2, 3, 4$

où la sommation, m, correspond à un nombre d'angles de phase ZRC.

12. Détecteur selon la revendication 10, caractérisé en ce que les moyens de paramètres d'erreur de verrouillage produisent les paramètres d'erreur de verrouillage fonction des sommages choisié sensiblement selon la forme fonctionnelle:

$$F_i = f\left\{ \sum_{j=1}^{m} \Delta F_{nj} \right\}$$

ou

$i = 1, 2, 3, 4$

$n = 1, 2, 3, 4$

où la sommation, m, correspond à un nombre d'angles de phase ZRC apparaissant successivement ayant la même polarité en ce qui concerne leurs dérivées secondes $d^2\psi/dt^2$.

13. Détecteur selon la revendication 2 ou l'une des revendications suivantes, caractérisé en ce que les moyens de polarisation (130) peuvent introduire une polarisation à fréquence variable dans au moins l'une des ondes, d'où il résulte un taux de changement de la relation de phase entre les ondes qui passe au moins une fois par zéro.

14. Détecteur selon la revendication 11, caractérisé en ce que les moyens caractérisant le détecteur comprennent en outre des moyens de traitement de signal (150) ayant comme entrées des signaux correspondants représentatifs des paramètres d'erreur de verrouillage, des signaux représentatifs de rotations angulaires connues du détecteur et des signaux représentatifs du premier signal de détecteur, les moyens de traitement de signal combinant lesdites entrées et produisant des coefficients de signature caractéristique du détecteur sous forme d'un polynôme représentatif de la fonction d'erreur de verrouillage du détecteur de vitesse angulaire.

15. Détecteur selon la revendication 14, caractérisé en ce que le polynôme représentatif de la fonction d'erreur de verrouillage à sensiblement la forme de:

$$\tilde{\theta} - \theta_R = C_1 F_1 + C_2 F_2 + C_3 F_3 + C_4 F_4$$

où

$\theta_R$ est la rotation angulaire connue du détecteur;

$\tilde{\theta}$ est le premier signal de détecteur;

$C1$ sont les coefficients de signature caractéristique;

$F1$ sont les paramètres d'erreur de verrouillage.

16. Détecteur selon la revendication 11, caractérisé en ce que les moyens de traitement de signal (150) comprennent des moyens pour réaliser une analyse de données de régression linéaire sur les entrées pour déterminer lesdits coefficients.

17. Détecteur selon la revendication 2, caractérisé en ce que les moyens de génération de signal de commande de polarisation comprennent des moyens de traitement de signal (950) sensibles audit au moins un premier paramètre d'erreur de verrouillage pour déterminer une valeur d'angle de phase de ladite relation de phase lors d'une première apparition d'une valeur choisie de $d\psi/dt$ de sorte que ladite erreur de verrouillage dans le détecteur est amenée vers un minimum, les moyens de traitement de signal fournissant ledit signal de commande de polarisation de sorte que les moyens de polarisation font varier ladite au moins une des ondes de sortie que la phase entre les ondes prend la valeur d'angle de phase déterminée par les moyens de traitement de signal lors de la première apparation d'une valeur choisie de $d\psi/dt$.

18. Détecteur selon la revendication 13, caractérisé en ce que les moyens de polarisation (130) introduisent une polarisation fréquentielle dans chacune des ondes de sorte que la différence de fréquence entre elles varie de façon sinusoïdale.

19. Détecteur selon la revendication 1 ou l'une des revendications suivantes, caractérisé en ce que les moyens de caractérisation du détecteur comprennent:

un premier moyen de traitement du signal (120) sensible audit au moins un signal de sortie des moyens de détecteur (110) pour fournir un premier signal de détecteur représentatif de la rotation du trajet en boucle fermée mais qui comprend une accumulation d'erreur de verrouillage inhérente au détecteur;

un second moyen de traitement de signal (140, 150) sensible audit au moins un signal de sortie des moyens de détecteur (110) pour fournir un signal de sortie représentatif de l'erreur de verrouillage accumulée dans le signal de sortie du premier moyen de traitement de signal à partir duquel l'erreur de verrouillage peut être déterminée; et

un troisième moyen de traitement de signal (160) combinant le signal de sortie du premier moyen de traitement de signal et le signal de sortie du second moyen de traitement de signal et fournissant un signal de sortie représentatif de la rotation du trajet en boucle fermée sensiblement exempt des composantes d'erreur de verrouillage.

20. Détecteur selon la revendication 19, caractérisé en ce que le second moyen de traitement de signal (140) comprend:

des moyens de détection de vitesse (613) sensibles audit au moins un signal de sortie des moyens de détection pour déterminer des apparitions de secondes valeurs choisies de la vitesse de changement de ladite relation de phase, ces moyens de détection de vitesse fournissant un signal de sortie ayant une modification de signal choisie indicative des secondes apparitions choisies;

des moyens de détection de signe (601, 602, 603) sensibles au moyen de détection (110) pour détecter des apparitions de valeur choisie dudit au moins un signal de sortie des moyens de détection, les moyens de traitement de signal fournissant un signal de sortie ayant une modification de signal choisie indicative des apparitions des valeurs choisies dudit au moins un signal de sortie des moyens de détection;

des moyens de synchronisation (611, 614, 615, 616, 618) sensibles audit signal de sortie des moyens de traitement de signal pour déterminer des instants incrémentiels entre certaines choisies des apparitions des valeurs choisies dudit au moins un signal de sortie des moyens de détection;

des moyens de détermination de phase (617) sensibles au signal de sortie des moyens de détection de vitesse et aux instants incrémentiels pour déterminer les valeurs de phase pour des premières valeurs choisies de la vitesse de changement de la relation de phase sur la base de ces instants incrémentiels.

21. Détecteur selon la revendication 20, caractérisé en ce que des parties des moyens de synchronisation et des moyens de détermination de phase (611 à 617) sont constitués par un processeur de signal unique.

22. Détecteur selon la revendication 21, caractérisé en ce que ledit processeur de signal unique est un microprocesseur.

23. Dans un détecteur de vitesse angulaire à vibration dans lequel deux ondes électromagnétiques progressives se propagent en sens opposé selon un trajet en boucle fermée, la fréquence de chacune des ondes est une fonction de la vitesse de rotation du trajet en boucle fermée, et une relation de phase étant établie entre les ondes également fonction de la vitesse de rotation du trajet en boucle fermée, et dans lequel le détecteur produit un premier signal de détecteur associé à la rotation angulaire vraie du détecteur mais que comprend une erreur de verrouillage inhérente au détecteur, et dans lequel le détecteur de vitesse angulaire est sensible à des moyens de polarisation capables d'introduire une polatisation à fréquence variable dans au moins l'une des ondes et entraînant qu'une vitesse de changement de la relation de phase passe par zéro au moins une fois, un procédé d'obtention d'un second signal de détecteur indicatif de la rotation de détecteur excluant sensiblement l'erreur de verrouillage inhérente au détecteur, caractérisé par:

étalonner le détecteur comprenant les étapes suivantes:

enregistrer des paires de données représentatives de rotations angulaires du détecteur et de données correspondantes représentatives de la réponse des détecteurs à ces données, fournies par le premier signal de détecteur mais qui comprennent une erreur de verrouillage;

obtenir des données de paramètre d'erreur incrémentielle correspondant auxdites paires de données obtenues à partir de la relation de phase entre les ondes, ces données de paramètre d'erreur incrémentielle étant associées à des changements incrémentiels de l'erreur de verrouillage dans le premier signal de détecteur;

accumuler certaines choisies des données de paramètres d'erreur incrémentielle et enregistrer leurs accumulations choisies correspondant à l'accumulation de l'erreur de verrouillage dans les données du premier signal de détecteur pour chacune des paires de données;

traiter analytiquement lesdites accumulations de données de paramètre d'erreur incrémentielle et les paires de données et produire une pluralité de coefficients de signature caractéristique d'un polynôme représentatif d'une fonction d'erreur de verrouillage du détecteur de sorte que la contribution de l'erreur de verrouillage associée à ces paires de données est sensiblement caractérisée;

actionner le détecteur de vitesse angulaire selon les étapes suivantes:

obtenir des données de paramètre d'erreur incrémentielle correspondant au premier signal de détecteur obtenu à partir de la relation de phase entre lesdites ondes, les données de paramètre d'erreur incrémentielle étant associées à des changements incrémentiels dans l'erreur de verrouillage du premier signal de détecteur;

accumuler certaines choisies des données de paramètre d'erreur incrémentielle et enregistrer des accumulations choisies de celles-ci correspondant à l'accumulation de l'erreur de verrouillage dans le premier signal de détecteur;

traiter lesdites accumulations choisies des paramètres d'erreur incrémentielle, les premiers signaux de détecteur, et les coefficients de signature caractéristique et produire le second signal de détecteur corrigé quant à son erreur de verrouillage, sensiblement exempt de composantes d'erreur de verrouillage.

24. Procédé selon la revendication 23, caractérisé en ce que la fonction d'erreur de verrouillage est de la forme

$$\tilde{\theta}-\theta_R=C_1F_1+C_2F_2+C_3F_3+...$$

où:

$\theta_R$ est la rotation angulaire connue;
$\tilde{\theta}$ est le premier signal de détecteur;
$C1$ sont les coefficients de signature caractéristique; et
$F1$ sont les accumulations sélectives des paramètres d'erreur incrémentielle;

et le second signal de détecteur corrigé quant à l'erreur de verrouillage est sensiblement de la forme:

$$\theta_c=\tilde{\theta}-\{C_1F_1+C_2F_2+C_3F_3+...\}$$

où:

$\theta_c$ le second signal de détecteur;
$\tilde{\theta}$ est le premier signal de détecteur;
$C1$ sont lesdits coefficients de signature caractéristique; et
$F1$ sont les accumulations sélectives des paramètres d'erreur incrémentielle.

FIG 1

FIG 2

EP 0 069 366 B1

FIG 5

FIG 3A

FIG 3B

FIG 4A

FIG 4B

FIG 4C

FIG 6

BEGIN

Z
QUARTER CYCLE
DETECTION

NO

YES

$J_C$
MAX

$J_C = J_C + 1$

YES

$J_C = 1$

STORE
TIME
(615) → (616)
($\Delta t$) ($J_C$)

RESET / START
TIMER
(615)

NO

DIRECTION
CHANGE
D

YES

2

FIG 7A

2

STORE
A, B, D, $A_p$, $B_p$, $D_p$

720

$\Delta_1 = \Delta t (J_C) / 2$
$\Delta_2 = \Delta_1 + \Delta t (J_C - 1)$
$\Delta_s = \Delta_2 + \Delta t (J_C - 2) + \Delta t (J_C - 3)$
$\quad + \Delta t (J_C - 4)$

$|\ddot{\Psi}| = \dfrac{4\pi}{\Delta_s^2 - \Delta_1^2}$

$\phi = \dfrac{|\ddot{\Psi}|}{2} (\Delta_2^2 - \Delta_1^2) - \dfrac{\pi}{2}$

$A \oplus B$

$\phi = -\phi$

0

$a = \dfrac{\ddot{\Psi}}{2} \Delta_1^2$

$\hat{\phi} = \hat{\phi} + K_\phi (\hat{\phi} - \phi)$

730

740

$A \oplus B \oplus D$

0

$a = a + \phi$

$A \oplus B \oplus \bar{D}$

0

$a = a - \phi$

FIG 7B

3

FIG 7C

FIG 9

920 — 1st SIGNAL PROCESSING MEANS

θ̃

912

910 — TRANSDUCER

911

900

931

930 — BIASING MEANS

940 — 2nd SIGNAL PROCESSING MEANS

941

950 — 3rd SIGNAL PROCESSING MEANS

951

960 — Σ

980 — AMPLITUDE CONTROL

970 — GT

971

FIG 8

FIG 10

FIG 11

FIG 12

**EP 0 069 366 B1**

FIG 13

12

FIG 14